# EUROPÄISCHE PATENTSCHRIFT

(11) **EP 3 452 222 B1**
(45) Veröffentlichungstag und Bekanntmachung des Hinweises auf die Patenterteilung: **17.03.2021**
(21) Anmeldenummer: 17740406.8
(22) Anmeldetag: 21.07.2017
(51) Int. Cl.: B01L 3/02, G01N 35/10, G01F 23/26, B01L 3/00, G01N 35/00, G01D 5/241

(54) **PIPETTENSPITZE FÜR EINE AUTOMATISIERTE PIPETTIERVORRICHTUNG**
PIPETTE TIP FOR AN AUTOMATED PIPETTING DEVICE
POINTE DE PIPETTE DESTINÉE À UN DISPOSITIF DE PIPETAGE AUTOMATIQUE

(30) Priorität: 22.07.2016 CH 9502016; 10.02.2017 CH 1592017; 19.04.2017 CH 5232017
(43) Veröffentlichungstag der Anmeldung: 13.03.2019
(73) Patentinhaber: Tecan Trading AG, 8708 Männedorf (CH)
(72) Erfinder: OTT, Philipp, 8496 Steg im Tösstal (CH); DZUNG, Matthias, 5430 Wettingen (CH); KUSTER, Martin, 8733 Eschenbach (CH)
(74) Vertreter: Troesch Scheidegger Werner AG
(86) Internationale Anmeldenummer: PCT/EP2017/068494
(87) Internationale Veröffentlichungsnummer: WO 2018/015543

(56) Entgegenhaltungen:
- EP-A1- 2 840 366
- US-A- 5 045 286
- US-A1- 2005 279 855
- US-B1- 6 551 558

## Beschreibung

### TECHNISCHES GEBIET DER ERFINDUNG

Die vorliegende Erfindung bezieht sich auf das technische Gebiet der automatisierten Flüssigkeitsbearbeitungssysteme und betrifft insbesondere Pipettenspitzen, vornämlich zum einmaligen Gebrauch (namentlich Wegwerf-Pipettenspitzen, englisch genannt "disposable tips", abgekürzt "DiTis"), welche zum Pipettieren, d.h. zum Aufnehmen bzw. Aspirieren und/oder Abgeben bzw. Dispensieren, von Flüssigkeiten verwendet werden. Des Weiteren betrifft die vorliegende Erfindung Pipettiervorrichtungen mit solchen Pipettenspitzen, Verfahren zum Bestimmen des Volumens einer Probenflüssigkeit in solchen Pipettenspitzen, Verfahren zum Erkennen solcher Pipettenspitzen an einer Pipettiervorrichtung, Verfahren zur Herstellung solcher Pipettenspitzen, Verwendungen solcher Pipettenspitzen sowie einen Satz solcher Pipettenspitzen.

### HINTERGRUND DER ERFINDUNG

Wenn in medizinischen, chemischen, analytischen oder pharmazeutischen Labors grosse Mengen an Proben zu untersuchen sind, werden dazu heute meist automatisierte Laborsysteme bzw. -anlagen eingesetzt, welche eine rasche und zuverlässige Verarbeitung jeder einzelnen Probe ermöglichen. Solche Laborsysteme sind oftmals als Flüssigkeitsbearbeitungssysteme auf die Handhabung von Flüssigkeitsvolumina ausgelegt. Solche Flüssigkeitsbearbeitungssysteme umfassen insbesondere Pipettierer sowohl zum Ansaugen und Abgeben von Flüssigkeiten oder Dispenser ausschliesslich zum Abgeben von Flüssigkeiten. Die meisten Laboranwendungen erfordern sehr präzise Pipettieroperationen um eine zufriedenstellende analytische Genauigkeit zu erhalten. Folglich ist eine genaue Kenntnis der verarbeiteten Probenmengen bzw. Flüssigkeitsvolumina von entscheidender Bedeutung.

In der Schweizer Patentanmeldung CH 00950/16 mit Anmeldetag 22. Juli 2016 werden ein Verfahren, welches eine genaue Bestimmung eines bearbeiteten (d.h. aspirierten bzw. dispensierten) Flüssigkeitsvolumens beim Pipettieren erlaubt, sowie eine Pipettiervorrichtung, welche dieses Verfahren für eine präzise Bestimmung der verarbeiteten Probenmengen bzw. Flüssigkeitsvolumina einsetzt, vorgeschlagen.

Bei vielen Anwendungen wird für die Handhabung jeder neuen Probe eine frische Pipettenspitze verwendet. Solche Pipettenspitzen sind daher für den einmaligen Gebrauch ausgelegt und werden meist als "Wegwerf-Pipettenspitzen" oder Englisch als "disposable tips" bezeichnet (abgekürzt auch "DiTis" genannt). Je nach Anwendung werden beim Pipettieren unterschiedliche Pipettenspitzen eingesetzt. Es ist daher wichtig, dass bei einer automatisierten Pipettiervorrichtung, diese in der Lage ist zu erkennen, ob überhaupt eine Pipettenspitze an der Pipettenröhre angeschlossen ist, und insbesondere ob die korrekte Pipettenspitze angeschlossen ist.

In der Schweizer Patentanmeldung CH 00159/17 mit Anmeldetag 10. Februar 2017 werden ein Verfahren, welches die Erkennung einer Pipettenspitze an einer Pipettiervorrichtung erlaubt, sowie eine Pipettiervorrichtung, welche mittels dieses Verfahren automatisch verschiedene Pipettenspitzen erkennen kann, vorgeschlagen.

In der Schweizer Patentanmeldung CH 00523/17 mit Anmeldetag 19. April 2017 wird ein Verfahren bereitgestellt, welches eine Bestimmung des Volumens einer Probenflüssigkeit in einer vorgeschlagenen Pipettenspitze ermöglicht.

Es besteht ein Problem im Stand der Technik, dass die Bestimmung eines Volumens von einer Probenflüssigkeit mit geringer elektrischer Leitfähigkeit ungenau sein kann.

Es besteht somit der Bedarf geeignete Pipettenspitzen bereitzustellen, welche zum Bestimmen des Volumens einer Probenflüssigkeit mit geringer elektrischer Leitfähigkeit in einer solchen Pipettenspitze und zum Erkennen solcher Pipettenspitzen an einer Pipettiervorrichtung eingesetzt werden können.

Die US 6,551,558 B1 betrifft ein Verfahren und eine Vorrichtung zum Flüssigkeitstransfer mit einem Analysegerät. Dafür werden unterschiedlich ausgeführte Pipettenspitzen vorgeschlagen. Die EP 2 840 366 A1 beschreibt ein System zum Erfasssen des Füllstands einer Flüssigkeit in einem Behälter, wie z.B. ein Tank. Die US 2005/0279855 A1 betrifft das Messen einer Flüssigkeit mit eine kapazitive Überwachung. Die US 5,045,286 beschreibt eine Vorrichtung zum Einspritzen/Dispensieren einer festgelegten Flüssigkeitsmenge sowie verschieden ausgestaltete Einspritzdüsen/Pipettenspitzen hierfür.

### ZUSAMMENFASSUNG DER ERFINDUNG

Es ist daher eine Aufgabe der vorliegenden Erfindung eine Pipettenspitze zum Anschliessen an eine Pipettenröhre von einer Pipettiervorrichtung bereitzustellen, mit deren Hilfe eine präzise Bestimmung des Volumens einer Probenflüssigkeit in der Pipettenspitze auch dann ermöglicht wird, wenn die Probenflüssigkeit eine geringe elektrische Leitfähigkeit hat. Diese Aufgabe wird erfindungsgemäss durch die in Anspruch 1 angegebene Pipettenspitze erfüllt.

Es ist eine weitere Aufgabe der vorliegenden Erfindung eine Pipettiervorrichtung mit einer Pipettenröhre zum fluiddichten Anschliessen einer vorgeschlagenen Pipettenspitze an ihrem einen Ende bereitzustellen, wobei an der Pipettiervorrichtung eine jeweils angeschlossene Pipettenspitze präzise erkannt wird. Diese Aufgabe wird erfindungsgemäss durch die in Anspruch 12 festgelegte Pipettiervorrichtung erfüllt.

Es ist eine weitere Aufgabe der vorliegenden Erfindung ein Verfahren bereitzustellen, welches eine genaue Bestimmung des Volumens einer Probenflüssigkeit in einer vorgeschlagenen Pipettenspitze auch dann ermöglicht, wenn die Probenflüssigkeit eine geringe elektrische Leitfähigkeit hat. Diese Aufgabe wird erfindungsgemäss durch das in Anspruch 18 vorgeschlagene Bestimmungsverfahren gelöst.

Es ist eine weitere Aufgabe der vorliegenden Erfindung ein Verfahren bereitzustellen, welches ermöglicht, dass die vorgeschlagene Pipettenspitze an einer Pipettiervorrichtung erkannt wird. Diese Aufgabe wird erfindungsgemäss durch das in Anspruch 20 vorgeschlagene Erkennungsverfahren gelöst. Es ist eine weitere Aufgabe der vorliegenden Erfindung ein Verfahren zur Herstellung einer vorgeschlagenen Pipettenspitze bereitzustellen. Diese Aufgabe wird erfindungsgemäss durch das in Anspruch 21 vorgeschlagene Herstellungsverfahren gelöst.

Es ist eine weitere Aufgabe der vorliegenden Erfindung eine Verwendung einer vorgeschlagenen Pipettenspitze anzugeben, bei welcher Verwendung das Volumen einer Probenflüssigkeit in der Pipettenspitze auch dann zuverlässig bestimmt wird, wenn die Probenflüssigkeit eine geringe elektrische Leitfähigkeit hat. Eine solche erfindungsgemässe Verwendung ist in Anspruch 23 angegeben.

Ferner ist es eine Aufgabe der vorliegenden Erfindung einen Satz von Pipettenspitzen bereitzustellen, welche für den Einsatz mit dem vorgeschlagenen Erkennungsverfahren geeignet sind. Ein solcher erfindungsgemässer Satz von Pipettenspitzen wird in Anspruch 25 aufgeführt.

Spezifische erfindungsgemässe Ausführungsvarianten werden in den abhängigen Ansprüchen angegeben.

Eine erfindungsgemässe Pipettenspitze ist zum Anschliessen an eine Pipettenröhre von einer Pipettiervorrichtung vorgesehen und als langgestreckte Röhre geformt, welche einen Pipettenkörper bildet, der an seinem einen, ersten Ende eine Öffnung zum Aspirieren und/oder Dispensieren von Flüssigkeiten aufweist, und an seinem anderen Ende zum (fluiddichten) Anschliessen an die Pipettenröhre ausgebildet ist, wobei die Pipettenspitze eine erste Elektrode als Volumenmesselektrode eines Messkondensators und eine zweite Elektrode als Eintauchdetektionselektrode aufweist, wobei sich die erste Elektrode auf einer äusseren Oberfläche des Pipettenkörpers befindet oder im Pipettenkörper eingebettet ist, und wobei sich die erste Elektrode (7) nicht bis zur Öffnung (5) am ersten Ende erstreckt und insbesondere von dieser Öffnung (5) beabstandet ist, und sich die zweite Elektrode zumindest teilweise auf einer inneren Oberfläche des Pipettenkörpers befindet. Mit dem Wortlaut "wobei sich die zweite Elektrode zumindest teilweise auf einer inneren Oberfläche des Pipettenkörpers befindet" ist gemeint, dass die zweite Elektrode zumindest teilweise dem Inneren des Pipettenkörpers ausgesetzt ist. Hierbei kann die zweite Elektrode abschnittsweise im Material des Pipettenkörpers derart eingebettet sein, dass sie immer noch teilweise bzw. abschnittsweise dem Inneren des Pipettenkörpers ausgesetzt ist. Es spielt hierbei keine Rolle, ob die zweite Elektrode im Pipettenkörpers eingebettet ist oder sogar zumindest abschnittsweise entlang der äusseren Oberfläche des Pipettenkörpers verläuft, solange immer noch ein oder mehrere Abschnitte bzw. Kontaktierungspunkte der zweiten Elektrode dem Inneren des Pipettenkörpers ausgesetzt sind und somit zumindest teilweise die Flüssigkeit im Inneren des Pipettenkörpers kontaktieren können.

Erfindungsgemäss sind die erste Elektrode und zweite Elektrode elektrisch leitfähig und kontaktiert die zweite Elektrode zumindest teilweise die Flüssigkeit an der inneren Oberfläche des Pipettenkörpers galvanisch.

In einer Ausführungsvariante besteht der Pipettenkörper aus einem elektrisch nichtleitenden Material, insbesondere einem nichtleitenden Kunststoff, wie beispielsweise nichtleitendes Polypropylen, welches insbesondere zumindest als Teil eines Dielektrikums des Messkondensators wirkt.

In einer weiteren Ausführungsvariante der Pipettenspitze ist die zweite Elektrode im Wesentlichen ausserhalb des relevanten Messkondensators angeordnet. Vorteilhafterweise liegt die zweite Elektrode ausserhalb des Messkondensators. Hierdurch kann die parasitäre Kapazität durch die zweite Elektrode vernachlässigbar sein im Vergleich zur Volumenkapazität. In einem Beispiel können die erste Elektrode und zweite Elektrode im Wesentlichen zueinander gegenüberliegend angeordnet sein.

In einer weiteren Ausführungsvariante der Pipettenspitze enthält die erste Elektrode zumindest zwei erste Teilelektroden und enthält die zweite Elektrode zumindest zwei zweite Teilelektroden, wobei die ersten Teilelektroden zueinander gegenüberliegend angeordnet sind und die zweiten Teilelektroden zueinander gegenüberliegend angeordnet sind. In einer weiteren Ausführungsvariante der Pipettenspitze ist die erste Elektrode länglich, insbesondere streifenförmig ausgebildet, verläuft axial entlang der Pipettenspitze, und umläuft insbesondere in einem Winkelbereich zwischen 20° und 270°, bevorzugt in einem Winkelbereich von 40°.

In einer weiteren Ausführungsvariante der Pipettenspitze ist die erste Elektrode länglich, insbesondere streifenförmig ausgebildet, verläuft axial entlang der Pipettenspitze und ist abschnittsweise unterschiedlich breit, wobei die erste Elektrode insbesondere ein treppenstufenförmiges Breitenprofil in axialer Richtung aufweist, und die Breite der ersten Elektrode z.B. am ersten Ende am geringsten ist, und die Breite in axialer Richtung stufenweise grösser wird.

In einer weiteren Ausführungsvariante der Pipettenspitze ist die erste Elektrode in einem Bereich von 3 mm bis 6 mm, bevorzugt in einem Bereich von 4 mm bis 6 mm, besonders bevorzugt um 5 mm von der Öffnung beabstandet.

In einer weiteren Ausführungsvariante der Pipettenspitze ist die zweite Elektrode streifenförmig ausgebildet und verläuft axial entlang der Röhre, und wobei sie insbesondere bis zu drei Vierteln des Innenumfangs der Pipettenspitze umläuft, weiter insbesondere die Hälfte des Innenumfangs der Pipettenspitze umläuft.

In einer weiteren Ausführungsvariante der Pipettenspitze kontaktiert die zweite Elektrode die Flüssigkeit im Pipettenkörper an im Wesentlichen vorbestimmten Kontaktierungspunkten entlang der Axialrichtung des Pipettenkörpers, wobei die Kontaktierungspunkte in einem Winkelbereich zueinander zwischen 90° und 270°, bevorzugt 180°, angeordnet sind. Im Falle der zuvor erwähnten Ausführung der Pipettenspitze, bei welcher die zweite Elektrode über Kontaktierungspunkte mit der Flüssigkeit im Inneren des Pipettenkörpers in Kontakt tritt, können diese Kontaktierungspunkte, ausgehend von der ersten Elektrode, abwechselnd von beiden Seiten angeordnet sein. In einer Ausführungsform sind die Kontaktierungspunkte insbesondere bei 90° und 270° angeordnet, wenn die erste Elektrode bei 0° liegt.

In einer weiteren Ausführungsvariante der Pipettenspitze erstreckt sich die zweite Elektrode bis zur Öffnung am ersten Ende oder ist die Öffnung am ersten Ende zumindest teilweise durch die zweite Elektrode ausgebildet.

In einer weiteren Ausführungsvariante ist die Pipettenspitze eine Wegwerf-Pipettenspitze, welche insbesondere zum einmaligen Gebrauch vorgesehen ist. Gemäss einem weiteren Aspekt der vorliegenden Erfindung umfasst eine Pipettiervorrichtung wenigstens eine Pipettenröhre, ein Druckerzeugungsmittel sowie eine (Kapazitäts-) Messeinheit, wobei an einem ersten Ende der Pipettenröhre eine erfindungsgemässe Pipettenspitze fluiddicht angeschlossen ist, und an ihrem anderen Ende die Pipettenröhre mit dem Druckerzeugungsmittel verbunden ist. Neben der Kapazität (Imaginärteil der komplexen Impedanz) kann sich auch der resistive Anteil (Realteil der komplexen Impedanz) ändern. Somit versteht der Fachmann, dass neben der Kapazität auch der resistive Anteil gemeint ist.

In einer Ausführungsvariante der Pipettiervorrichtung sind in einem Bereich zum Anschliessen der Pipettenspitze ein erster elektrischer Kontakt zur Herstellung einer elektrischen Verbindung, insbesondere einer galvanischen Verbindung, mit einer ersten Elektrode als Volumenmesselektrode vorhanden, welche sich auf einer äusseren Oberfläche des Pipettenkörpers befindet oder im Pipettenkörper eingebettet ist. In einem Beispiel kann zusätzlich oder alternativ ein zweiter elektrischer Kontakt zur Herstellung einer elektrischen Verbindung mit einer zweiten Elektrode als Eintauchdetektionselektrode vorhanden sein, welche sich zumindest teilweise auf einer inneren Oberfläche des Pipettenkörpers befindet.

In einer weiteren Ausführungsvariante der Pipettiervorrichtung befindet sich die Flüssigkeit in einem Probenbehälter, welcher elektrisch leitend oder kapazitiv gekoppelt mit einer leitfähigen Arbeitstischoberfläche verbunden ist, welche mit Masse verbunden ist.

In einer weiteren Ausführungsvariante der Pipettiervorrichtung ist der erste elektrische Kontakt über einen elektrischen Leiter mit der Messeinheit verbunden und ist der zweite elektrische Kontakt über die Flüssigkeit und eine kapazitive Kopplung der Flüssigkeit über die Arbeitstischoberfläche mit der Messeinheit verbunden.

In einer weiteren Ausführungsvariante der Pipettiervorrichtung ist die Messeinheit ausgebildet, um in Abhängigkeit einer gemessenen Kapazität eines Messkondensators, welcher durch die erste Elektrode und mindestens einen Teil einer in der Pipettenspitze aufnehmbaren Probenflüssigkeit als Gegenelektrode gebildet wird, ein Volumen einer sich in der Pipettenspitze befindenden Probenflüssigkeit zu bestimmen, und weiter ausgebildet, um mit Hilfe der zweiten Elektrode ein Eintauchen der Pipettenspitze in die Probenflüssigkeit zu detektieren.

In einer weiteren Ausführungsvariante umfasst die Pipettiervorrichtung weiter eine Detektionseinheit zum Erkennen ob die Pipettenspitze am ersten Ende der Pipettenröhre angeschlossen ist, und/oder zum Erkennen eines charakteristischen Merkmals der Pipettenspitze basierend auf einer Messung einer weiteren Kapazität, wobei die weitere Kapazität abhängig ist von einem oder mehreren der folgenden Eigenschaften:
- einem Material aus dem die Pipettenspitze besteht;
- einer Geometrie der Pipettenspitze, insbesondere einer Form der Pipettenspitze, weiter insbesondere einem Durchmesser und/oder einer Länge der Pipettenspitze;
- einer Beschichtung der Pipettenspitze, insbesondere einem Material aus dem die Beschichtung der Pipettenspitze besteht, weiter insbesondere einer Ausdehnung oder Dicke der Beschichtung der Pipettenspitze;
- einem Material aus dem die erste und/oder zweite Elektrode besteht;
- einer Geometrie (wie z.B. einer Länge, Breite, Dicke oder Fläche) der ersten und/oder zweiten Elektrode.

Gemäss einem weiteren Aspekt der vorliegenden Erfindung umfasst ein Verfahren zum Bestimmen eines Volumens einer Probenflüssigkeit in einer vorgeschlagenen Pipettenspitze folgende Schritte (= Bestimmungsverfahren):
- Messen einer Kapazität eines Messkondensators umfassend eine erste Elektrode, welche sich auf einer äusseren Oberfläche des Pipettenkörpers befindet oder im Pipettenkörper eingebettet ist, und eine Gegenelektrode, die durch mindestens einen Teil einer Probenflüssigkeit, welche sich in der Pipettenspitze befindet, gebildet wird;
- Bestimmen des Volumens der Probenflüssigkeit in der Pipettenspitze in Abhängigkeit der gemessenen Kapazität.

In einer Ausführungsvariante umfasst das Bestimmungsverfahren weiter den Schritt:
- Detektieren eines Eintauchens der Pipettenspitze in die Probenflüssigkeit mit Hilfe einer zweiten Elektrode als Eintauchdetektionselektrode (bzw. als Eintauchkontakt), wobei sich die zweite Elektrode zumindest teilweise auf einer inneren Oberfläche des Pipettenkörpers befindet.

Ein weiterer Aspekt der vorliegenden Erfindung betrifft ein Verfahren zum Erkennen (= Erkennungsverfahren) einer vorgeschlagenen Pipettenspitze an einer Pipettiervorrichtung mit einer Pipettenröhre, die an ihrem einen, ersten Ende zum lösbaren Aufnehmen einer Pipettenspitze zum Aspirieren bzw. Dispensieren einer Flüssigkeit ausgebildet ist, und die an ihrem anderen Ende mit einem Druckerzeugungsmittel wirkverbunden ist, wobei das Verfahren ein Messen einer Kapazität umfasst, die abhängig ist von einem oder mehreren der folgenden Eigenschaften:
- einem Material aus dem die Pipettenspitze besteht;
- einer Geometrie der Pipettenspitze, insbesondere einer Form der Pipettenspitze, weiter insbesondere einem Durchmesser und/oder einer Länge der Pipettenspitze;
- einer Beschichtung der Pipettenspitze, insbesondere einem Material aus dem die Beschichtung der Pipettenspitze besteht, weiter insbesondere einer Ausdehnung oder Dicke der Beschichtung der Pipettenspitze;
- einem Material aus dem die erste und/oder zweite Elektrode besteht;
- einer Geometrie (wie z.B. einer Länge, Breite, Dicke oder Fläche) der ersten und/oder zweiten Elektrode.

Gemäss einem weiteren Aspekt der vorliegenden Erfindung umfasst ein Verfahren zur Herstellung (= Herstellungsverfahren) einer vorgeschlagenen Pipettenspitze das Formen der Pipettenspitze als langgestreckte Röhre, welche einen Pipettenkörper bildet, aus einem ersten Material, das Formen einer ersten Elektrode aus einem zweiten Material an der Pipettenspitze auf einer äusseren Oberfläche des Pipettenkörpers oder im Pipettenkörper eingebettet, und das Formen einer zweiten Elektrode aus einem dritten Material an der Pipettenspitze zumindest teilweise auf einer inneren Oberfläche des Pipettenkörpers. In einem Beispiel können das zweite Material und das dritte Material gleich sein.

In einer weiteren Ausführungsvariante erfolgen die Schritte des Formens mittels eines Mehrkomponentenspritzgussverfahrens, insbesondere desselben Mehrkomponentenspritzgussverfahrens, sequenziell oder gleichzeitig mit dem Formen der Pipettenspitze und der ersten und/oder zweiten Elektrode. Im Falle der Herstellung durch sequenzielle Schritte kann in einem ersten Schritt das nichtleitende erste Material zum Formen der Pipettenspitze eingespritzt werden. Nachdem dieses erstarrt ist (z.B. ca. 6 Sekunden), können das leitende zweite und dritte Material eingespritzt werden. Selbstverständlich sind weitere Herstellungsverfahren realisierbar.

Ein weiterer Aspekt der vorliegenden Erfindung betrifft eine Verwendung der vorgeschlagenen Pipettenspitze zum Bestimmen eines Volumens einer Probenflüssigkeit, welche sich in der Pipettenspitze befindet, mit Hilfe der ersten Elektrode als Volumenmesselektrode an der Pipettenspitze, wobei sich die erste Elektrode auf einer äusseren Oberfläche des Pipettenkörpers befindet oder im Pipettenkörper eingebettet ist.

Ein weiterer Aspekt der vorliegenden Erfindung betrifft eine Verwendung der vorgeschlagenen Pipettenspitze zum Detektieren eines Eintauchens der Pipettenspitze in die Probenflüssigkeit mit Hilfe der zweiten Elektrode als Eintauchdetektionselektrode an der Pipettenspitze, wobei die zweite Elektrode zumindest teilweise die innere Oberfläche des Pipettenkörpers berührt.

Gemäss einem weiteren Aspekt der vorliegenden Erfindung umfasst ein Satz von vorgeschlagenen Pipettenspitzen mindestens zwei Typen von Pipettenspitzen, wobei sich die mindestens zwei Typen darin unterscheiden, dass beim Anwenden des vorgeschlagenen Verfahrens zum Erkennen einer Pipettenspitze eine Kapazität eines ersten Typs von Pipettenspitzen in einem ersten Bereich liegt und die Kapazität eines zweiten Typs von Pipettenspitzen in einem zweiten Bereich liegt, wobei der erste und zweite Bereich nicht überlappend sind, und wobei sich die mindestens zwei Typen insbesondere durch eines der folgenden Merkmale unterscheiden:
- Fassungsvolumen;
- Spitzenöffnungsgrösse/-durchmesser zum Aspirieren und Dispensieren einer Flüssigkeit;
- mit oder ohne Filter zur Verhinderung von Kontaminationen der Pipettenröhre beim Aspirieren einer Probe, sowie insbesondere eine Art des Filters;
- Reinheitskategorie;
- Verwendungszweck;
- Volumenmessfunktion;
- Dichtungsvermögen eines Anschlusses der Pipettenspitzen an die Pipettenröhre,
und wobei insbesondere die äussere Geometrie der mindestens zwei Typen identisch sein kann.

Es wird ausdrücklich darauf hingewiesen, dass die vorstehenden Ausführungsvarianten beliebig kombinierbar sind. Lediglich diejenigen Kombinationen von Ausführungsvarianten sind ausgeschlossen, die durch die Kombination zu Widersprüchen führen würden.

### KURZE BESCHREIBUNG DER ZEICHNUNGEN

Nichtlimitierende Ausführungsbeispiele der vorliegenden Erfindung werden nachstehend anhand von Figuren noch näher erläutert. Es zeigen:

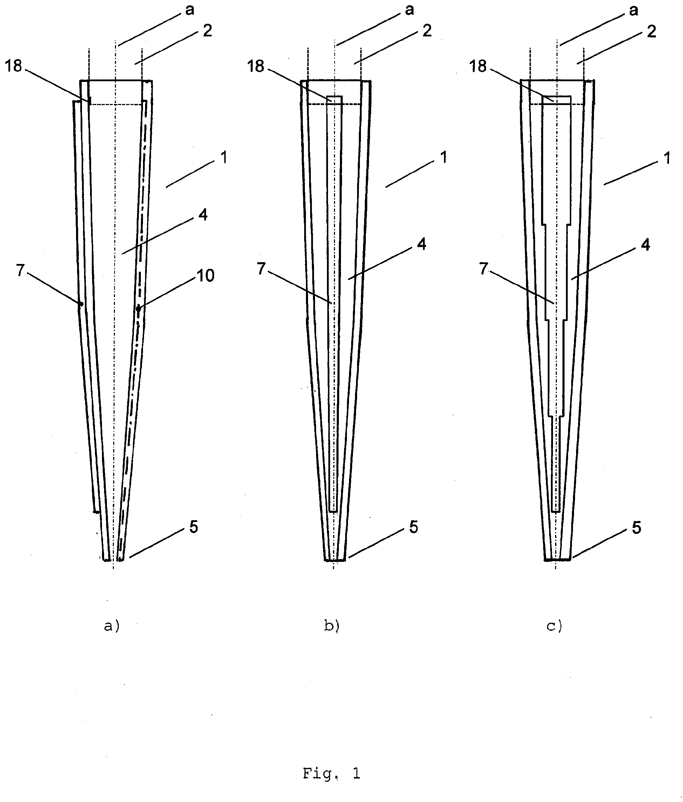

- Fig. 1a): eine schematische Darstellung eines ersten Ausführungsbeispiels einer erfindungsgemässen Pipettenspitze in Schnittansicht mit jeweils streifenförmiger Volumenmesselektrode und Eintauchdetektionselektrode in einer Ansicht von der Seite;
- b): eine schematische Darstellung des ersten Ausführungsbeispiels einer erfindungsgemässen Pipettenspitze in einer Ansicht von vorne (auf die Volumenmesselektrode);
- c): eine schematische Darstellung eines zweiten Ausführungsbeispiels einer erfindungsgemässen Pipettenspitze mit einer treppenstufenförmigen Volumenmesselektrode in einer Ansicht von vorne;

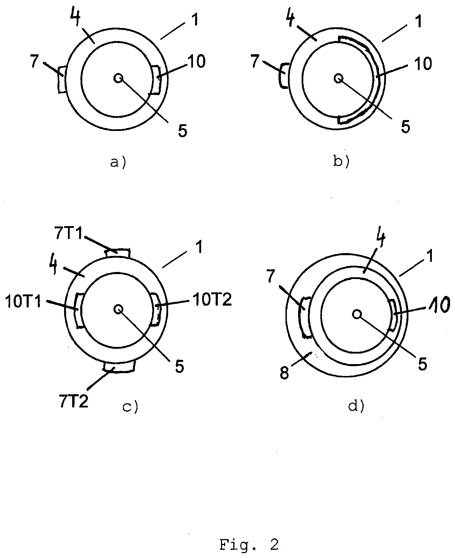

- Fig. 2a): eine schematische Darstellung des ersten Ausführungsbeispiels einer erfindungsgemässen Pipettenspitze mit streifenförmiger Eintauchdetektionselektrode in einer Querschnittsansicht von oben;
- b): eine schematische Darstellung des zweiten Ausführungsbeispiels einer erfindungsgemässen Pipettenspitze mit einer wie schematisch angezeigt gebogenen Eintauchdetektionselektrode in einer Querschnittsansicht von oben;
- c): eine schematische Darstellung eines dritten Ausführungsbeispiels einer erfindungsgemässen Pipettenspitze mit zwei ersten Teilelektroden und zwei zweiten Teilelektroden in einer Querschnittsansicht von oben;
- d): eine schematische Darstellung eines vierten Ausführungsbeispiels einer erfindungsgemässen Pipettenspitze mit einer Beschichtung über der Volumenmesselektrode in einer Querschnittsansicht von oben;
- Fig. 3a): eine schematische Darstellung eines fünften Ausführungsbeispiels einer erfindungsgemässen Pipettenspitze mit einer im Pipettenkörper eingebetteten Volumenmesselektrode und einer Eintauchdetektionselektrode auf der inneren Oberfläche des Pipettenkörpers in einer Ansicht von der Seite;
- b): eine schematische Darstellung des fünften Ausführungsbeispiels einer erfindungsgemässen Pipettenspitze in einer Querschnittsansicht von oben;
- Fig. 4a): eine schematische Darstellung eines Eintauch- und Austauchvorgangs einer Pipettenspitze bei einem Behälter mit einer Probenflüssigkeit;
- b): ein beispielhafter zeitlicher Verlauf der Kapazität eines Messkondensators mit Signalsprüngen beim Eintauchen und Austauchen der Pipettenspitze in bzw. aus der Probenflüssigkeit;
- Fig. 5a): eine schematische Darstellung eines Aspirations- und Dispensationsvorgangs einer erfindungsgemässen Pipettenspitze beim Behälter mit der Probenflüssigkeit;
- b): ein beispielhafter zeitlicher Verlauf der Kapazität eines Messkondensators mit einem linearen Signalanstieg und -abfall beim Aspirieren und Dispensieren von der Probenflüssigkeit mit der Pipettenspitze;
- Fig. 6a): eine schematische Darstellung eines Aspirationsvorgangs mit einer mit Probenflüssigkeit einer z.B. geringen Leitfähigkeit gefüllten Pipettenspitze gemäss dem Stand der Technik;
- b): eine schematische Darstellung eines Aspirationsvorgangs mit einer mit Probenflüssigkeit einer z.B. geringen Leitfähigkeit gefüllten Pipettenspitze in einer Ausführung der Erfindung;
- Fig. 7: eine schematische Darstellung eines Ausführungsbeispiels einer erfindungsgemässen Pipettiervorrichtung bzw. eines erfindungsgemässen Flüssigkeitsbearbeitungssystems;
- Fig. 8: eine schematische Darstellung von drei beispielhaften erfindungsgemässen Pipettenspitzen a), b) & c) mit unterschiedlich breiten Elektroden, welche einen Satz von drei unterscheidbaren Typen von Pipettenspitzen bilden; und
- Fig. 9): eine Darstellung einer Pipettenspitze gemäss einer weiteren Ausführungsform der Erfindung in drei a), b) & c) unterschiedlichen Ansichten.

In den Figuren stehen gleiche Referenzzeichen für gleiche Elemente.

### DETAILLIERTE BESCHREIBUNG DER ERFINDUNG

In Fig. 1a) wird in einer schematischen Darstellung ein erstes Ausführungsbeispiel einer Pipettenspitze 1 mit einer streifenförmigen Volumenmesselektrode 7 und einer streifenförmigen Eintauchdetektionselektrode 10 in einer Schnittansicht von der Seite gezeigt, während in Fig. 1b) die Pipettenspitze 1 in einer Ansicht von vorne (auf die Volumenmesselektrode) gezeigt wird.

Die langgestreckte Röhre, welche einen Pipettenkörper 4 bildet, weist eine im Wesentlichen konische Form auf. Der Querschnitt der Röhre kann eine jegliche Form annehmen, z.B. oval, rechteckig, etc. Der Pipettenkörper 4 könnte aber z.B. auch pyramidenförmig sein. Hierbei befinden sich erfindungsgemäss die Volumenmesselektrode 7 auf einer äusseren Oberfläche des Pipettenkörpers 4 und die Eintauchdetektionselektrode 10 auf einer inneren Oberfläche des Pipettenkörpers 4. Die Eintauchdetektionselektrode 10 ist in Durchsicht durch das Material des Pipettenkörpers 4 gestrichelt dargestellt. Die Eintauchdetektionselektrode 10 liegt innerhalb der Wand des Pipettenkörpers 4 und ist dem Inneren des Pipettenkörpers 4 zugewandt bzw. ausgesetzt. Somit kann die Probenflüssigkeit die Eintauchdetektionselektrode 10 über deren gesamte Länge kontaktieren, wie z.B. in Fig. 1a) dargestellt. Die Probenflüssigkeit kann die Eintauchdetektionselektrode aber auch teilweise, z.B. in regelmässigen Abständen (Kontaktierungspunkte), kontaktieren (nicht gezeigt). Die Eintauchdetektionselektrode 10 erstreckt sich bis zur Öffnung 5, damit sie beim Eintauchen in die Probenflüssigkeit mit dieser in Kontakt kommt. Im Gegensatz dazu sollte die Volumenmesselektrode 7 nicht mit der Probenflüssigkeit in Kontakt treten, sodass sich die Volumenmesselektrode 7 z.B. nicht bis zur Öffnung 5 erstreckt und von dieser beabstandet ist. Die Volumenmesselektrode 7 und Eintauchdetektionselektrode 10 sind elektrisch leitfähig und können im Wesentlichen zueinander gegenüberliegend angeordnet sein (hierzu wird im Folgenden detaillierter eingegangen). Die Eintauchdetektionselektrode 10 kann z.B. aus demselben Material wie die Volumenmesselektrode 7 bestehen.

An seinem einen, ersten Ende weist der Pipettenkörper 4 eine Öffnung 5 zum Aspirieren und/oder Dispensieren von Flüssigkeiten auf. Das andere Ende ist zum fluiddichten Anschliessen an eine Pipettenröhre 2 ausgebildet, wobei die Pipettenröhre 2 dazu beispielsweise einen Konus als Adapter aufweist. Die Volumenmesselektrode 7 wirkt als eine erste Elektrode eines Messkondensators, welcher ferner zumindest einen Teil einer in der Pipettenspitze 1 aufnehmbaren Probenflüssigkeit als Gegenelektrode umfasst. Dabei bildet der Pipettenkörper 4 das Dielektrikum dieses Messkondensators. Hierbei kann der Pipettenkörper 4 aus einem elektrisch nichtleitenden Material bestehen, welches das Dielektrikums bildet, insbesondere einem nichtleitenden Kunststoff, wie beispielsweise nichtleitendes Polypropylen.

Die Volumenmesselektrode 7 ist in dem gezeigten Beispiel als schmaler Streifen auf der äusseren Oberfläche des Pipettenkörpers 4 angeordnet und verläuft axial entlang der Pipettenspitze 1 (mit zentraler Achse a). Die Volumenmesselektrode 7 weist z.B. eine Breite in einem Bereich von 0.8 mm bis 5 mm, bevorzugt im Bereich von 0.8 mm bis 2 mm, besonders bevorzugt von 1 mm, auf. An ihrem oberen Ende weist die Volumenmesselektrode 7 einen elektrischen Kontakt 18 auf, mittels dem die Volumenmesselektrode 7 mit der Pipettenröhre 2 galvanisch verbindbar ist.

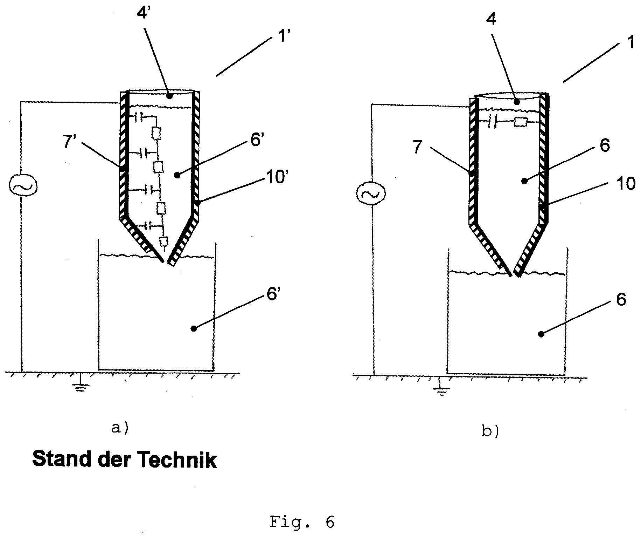

Die Eintauchdetektionselektrode 10 ist hier ebenfalls als schmaler Streifen ausgebildet und verläuft axial entlang der Pipettenspitze 1 (mit zentraler Achse a). Mit Hilfe dieser Eintauchdetektionselektrode 10 kann festgestellt werden, wann die Pipettenspitze 1 die Oberfläche der Probenflüssigkeit berührt bzw. durchstösst und in diese eintaucht (-> "capacitive liquid level detection", cLLD). Erfindungsgemäss befindet sich die Eintauchdetektionselektrode 10 zumindest teilweise auf der inneren Oberfläche des Pipettenkörpers 4 bzw. ist dem Inneren des Pipettenkörpers 4 zumindest teilweise ausgesetzt. In dem gezeigten Beispiel ist die Eintauchdetektionselektrode 10 teilweise in die Wand des Pipettenkörpers 4 eingebettet. Somit steht die Eintauchdetektionselektrode 10 mit der aspirierten Probenflüssigkeit zumindest teilweise in Kontakt, wodurch eine genauere Bestimmung des Volumens der aspirierten Probenflüssigkeit ermöglicht wird, insbesondere wenn die Probenflüssigkeit eine geringe Leitfähigkeit hat. Details hierzu werden im Folgenden im Zusammenhang mit u.a. der Fig. 6 näher erläutert.

In Fig. 1c) wird in einer schematischen Darstellung ein zweites Ausführungsbeispiel einer Pipettenspitze 1 mit einer treppenstufenförmigen Volumenmesselektrode 7 in einer Ansicht von vorne gezeigt. Bei Verwendung einer solchen Volumenmesselektrode 7 treten jeweils Kapazitätssprünge (in der Volumenkennlinie, d.h. des Volumens der Probenflüssigkeit in der Pipettenspitze 1 in Abhängigkeit von der gemessenen Kapazität) auf, wenn der Füllstand der Pipettenspitze 1 eine der Treppenstufen der Volumenmesselektrode 7 überschreitet. So kann z.B. der Füllstand bzw. das Volumen der Probenflüssigkeit in der Pipettenspitze 1 weitgehend unabhängig von der Leitfähigkeit der Probenflüssigkeit mindestens grob ermittelt werden, z.B. in Stufen von 1/4-, 1/2-, 3/4-, 4/4-voll (oder auch feiner wie in Zehnteln). Obwohl nicht zu erkennen, ist auch in diesem Ausführungsbeispiel die Eintauchdetektionselektrode zumindest teilweise auf der inneren Oberfläche des Pipettenkörpers 4 angeordnet.

Die Figuren 2a)-c) zeigen das erste und zweite Ausführungsbeispiel sowie ein drittes Ausführungsbeispiel der Pipettenspitze 1 in einer Querschnittsansicht von oben. Die Öffnung 5 ist im Bereich der Mittenachse von der Pipettenspitze 1 angeordnet. Wie zu erkennen ist, ist in den Figuren 2a)-c) die Volumenmesselektrode 7 auf der äusseren Oberfläche des Pipettenkörpers 4 angeordnet, während die Eintauchdetektionselektrode 10 zumindest teilweise die innere Oberfläche des Pipettenkörpers 4 bildet beziehungsweise kontaktiert. Die Eintauchdetektionselektrode 10 kann axial entlang des Pipettenkörpers 4 verlaufen und hierbei streifenförmig ausgebildet sein, wie in Fig. 2a) gezeigt. Die Eintauchdetektionselektrode 10 kann alternativ auch bogenförmig sein und den Pipettenkörper 4 bis zu einem bestimmten Innenumfang bogenförmig umlaufen, wie in Fig. 2b) gezeigt. In einem Beispiel, wie in Fig. 2b) gezeigt, kann die bogenförmige Eintauchdetektionselektrode 10 den Pipettenkörper 4 um die Hälfte seines Innenumfangs (180°) umlaufen. In einem weiteren Beispiel kann die bogenförmige Eintauchdetektionselektrode den Pipettenkörper 4 im Inneren um drei Viertel seines Innenumfangs (270°) umlaufen (nicht gezeigt). Ein weiterer vorteilhafter Umlaufwinkel beträgt 220°. Soweit technisch sinnvoll, sind weitere Umlaufwinkelbereiche möglich, mit welchen die bogenförmige Eintauchdetektionselektrode 10 den Pipettenkörper 4 im Inneren umlaufen kann, bzw. dem Inneren des Pipettenkörpers 4 zugewandt ist.

In einem weiteren Beispiel kann die erste Elektrode zumindest zwei erste Teilelektroden 7T1,7T2 enthalten und die zweite Elektrode zumindest zwei zweite Teilelektroden 10T1,10T2 enthalten, wobei die ersten Teilelektroden 7T1,7T2 zueinander gegenüberliegend angeordnet sind und die zweiten Teilelektroden 10T1,10T2 zueinander gegenüberliegend angeordnet sind, wie in Fig. 2c) gezeigt.

Die Fig. 2d) zeigt ein viertes Ausführungsbeispiel der Pipettenspitze 1 in einer Querschnittsansicht von oben mit einer Beschichtung 8 über der Volumenmesselektrode 7 sowie über dem restlichen Pipettenkörper 4 (d.h. über der äusseren Oberfläche der Pipettenspitze 1). Diese Beschichtung 8 kann beispielsweise nur in einem Bereich der Volumenmesselektrode 7 vorhanden sein, z.B. um zu verhindern, dass die Volumenmesselektrode 7 mit der Probenflüssigkeit in Berührung kommt, wenn die Pipettenspitze 1 zu weit in die Probenflüssigkeit abgesenkt wird. Andererseits kann die gesamte Pipettenspitze 1 mit einer Beschichtung 8 überzogen sein, wie z.B. mit einer hydrophoben, oleophoben oder antibakteriellen Beschichtung 8.

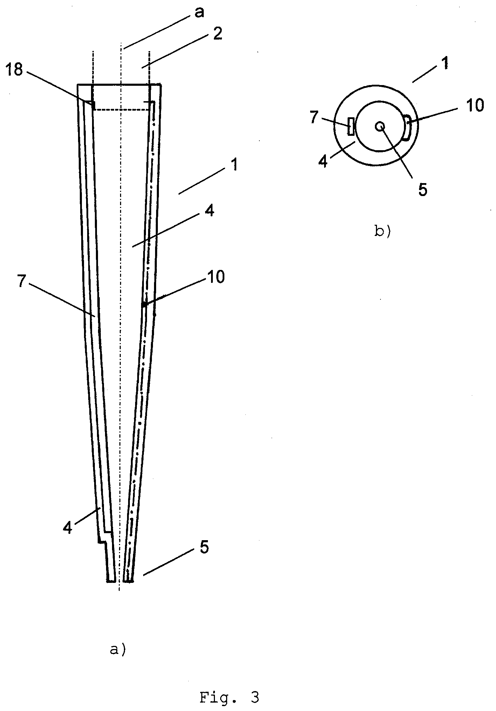

In Fig. 3a) ist in einer schematischen Darstellung ein viertes Ausführungsbeispiel einer Pipettenspitze 1 mit einer im Pipettenkörper 4 eingebetteten Volumenmesselektrode 7 und einer zumindest teilweise auf der inneren Oberfläche des Pipettenkörpers 4 angeordneten Eintauchdetektionselektrode 10 in einer Schnittansicht von der Seite gezeigt. Die Volumenmesselektrode 7 ist vom Inneren des Pipettenkörpers 4 durch das Material des Pipettenkörpers 4 getrennt, welches Material als Dielektrikum dient. Die Volumenmesselektrode 7 und Eintauchdetektionselektrode 10 sind streifenförmig ausgebildet und verlaufen axial entlang des Pipettenkörpers 4. Die Eintauchdetektionselektrode 10 erstreckt sich bis zur Öffnung 5, während sich die Volumenmesselektrode 7 fast bis zur Öffnung 5 erstrecken kann. Dieselbe Pipettenspitze 1 ist in Fig. 3b) in einer schematischen Ansicht von oben dargestellt. Dabei ist die Volumenmesselektrode 7 allseitig vom Material des Pipettenkörpers 4 umhüllt und darin eingeschlossen. Auch hier ist die Eintauchdetektionselektrode 10 abschnittsweise dem Inneren des Pipettenkörpers 4 zugewandt bzw. ausgesetzt und kann hierin enthaltene Probenflüssigkeit kontaktieren.

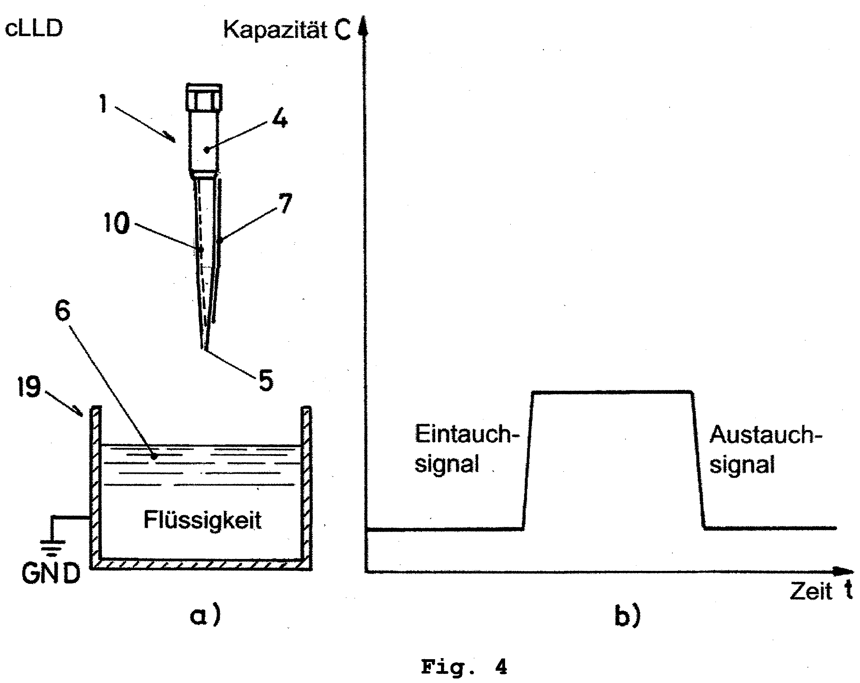

Fig. 4a) illustriert in einer schematischen Darstellung eine Verwendung der vorgeschlagenen Pipettenspitze 1 zur Eintauchdetektion (-> cLLD), d.h. zur Bestimmung des Zeitpunkts, ab wann die Pipettenspitze 1 in eine Probenflüssigkeit 6, welche sich in einem Behälter 19 befindet, wie z.B. einer Wanne, einem Probenröhrchen oder einem "Well" in einer Mikroplatte, eintaucht (und austaucht). Die Eintauchdetektionselektrode 10 ist erfindungsgemäss zumindest teilweise an der inneren Oberfläche des Pipettenkörpers 4 angeordnet, wie schematisch angedeutet. Wie aus dem zeitlichen Verlauf der gemessenen Kapazität in der Fig. 4b) hervorgeht, steigt die Kapazität sprunghaft an, sobald die Eintauchdetektionselektrode 10 die Probenflüssigkeit 6 berührt und in diese eintaucht, und fällt dann wieder schlagartig ab, sobald die Eintauchdetektionselektrode 10 aus der Probenflüssigkeit 6 herausgezogen wird.

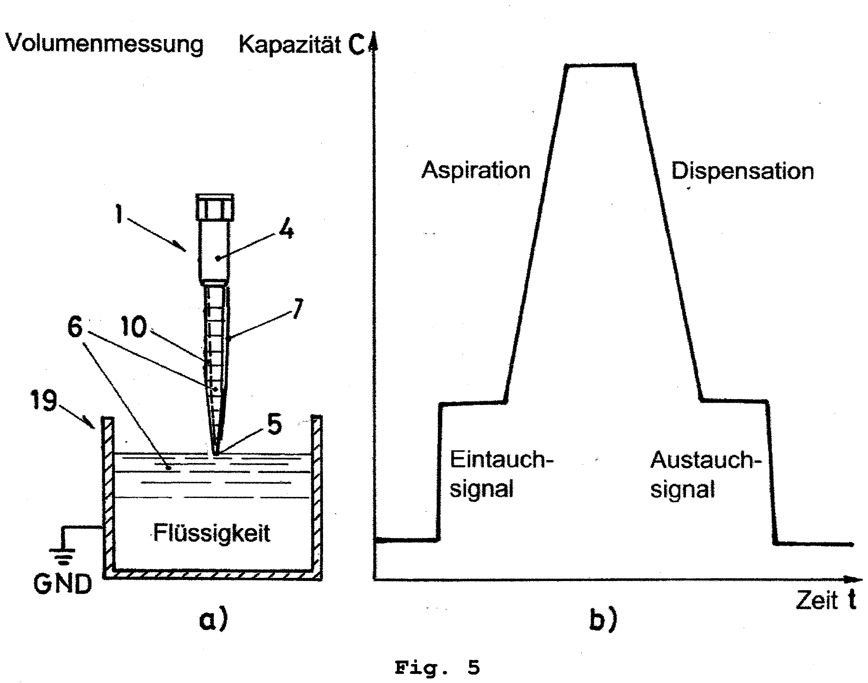

Fig. 5a) illustriert die Verwendung der vorgeschlagenen Pipettenspitze 1 zur Messung des Volumens der Probenflüssigkeit 6, welche sich in der Pipettenspitze 1 beim Aspirieren und Dispensieren befindet. Wie aus dem zeitlichen Verlauf der gemessenen Kapazität in der Fig. 5b) hervorgeht, steigt die Kapazität sprunghaft an sobald die Eintauchdetektionselektrode 10 die Probenflüssigkeit 6 berührt und in diese eintaucht, steigt dann linear an (abhängig von der Form der Pipettenspitze 1 und der Geometrie der Volumenmesselektrode 7) aufgrund der immer höheren Probenflüssigkeitssäule in der Pipettenspitze 1, welche eine immer grösser werdende Gegenelektrode zur Volumenmesselektrode 7 bildet, fällt dann linear ab beim Dispensieren und macht schliesslich wieder einen Sprung runter, sobald die Eintauchdetektionselektrode 10 aus der Probenflüssigkeit 6 herausgezogen wird.

Fig. 6a) stellt schematisch eine mit Probenflüssigkeit 6' gefüllte Pipettenspitze 1' gemäss dem Stand der Technik dar, während Fig. 6b) schematisch eine mit Probenflüssigkeit 6 gefüllte Pipettenspitze 1 gemäss einer Ausführungsvariante der Erfindung darstellt.

In beiden Darstellungen wird angenommen, dass die Pipettenspitzen 1,1' ein grosses Volumen der Probenflüssigkeit 6,6' aufgenommen haben, wobei als Probenflüssigkeit 6,6' hier eine Flüssigkeit mit einer geringen Leitfähigkeit angenommen wird. Es wird ferner in beiden Fällen angenommen, dass sich die Volumenmesselektrode 7,7' ausserhalb der Probenflüssigkeit 6,6' im Probenbehälter befindet bzw. hiermit nicht in Kontakt steht.

Es ist im Stand der Technik bekannt, dass eine Eintauchdetektionselektrode 10' an der äusseren Oberfläche eines Pipettenkörpers 4' der Pipettenspitze 1' angebracht ist, wie in Fig. 6a) gezeigt.

Erfindungsgemäss ist die Eintauchdetektionselektrode 10 zumindest teilweise an der inneren Oberfläche des Pipettenkörpers 4 angebracht, wie in Fig. 6b) gezeigt. Alternativ kann die Eintauchdetektionselektrode 10 die Flüssigkeitssäule in der Pipettenspitze 1 in regelmässigen Abständen kontaktieren (nicht gezeigt), wie im Folgenden detaillierter erläutert.

Abermals bezugnehmend auf das in Fig. 6a) gezeigte Beispiel aus dem Stand der Technik, unter der Annahme einer Probenflüssigkeit 6' mit einer geringen Leitfähigkeit, nimmt der Widerstand innerhalb der Probenflüssigkeit 6' mit zunehmender Probenflüssigkeit 6' Säule in der Pipettenspitze 1' zu, wie schematisch durch eine kapazitiv gekoppelte Widerstand-Serienschaltung (RC-Schaltung) angedeutet. Mit zunehmendem Volumen der Probenflüssigkeit 6' in der Pipettenspitze 1' steigt die Kapazität an und steigt der resistive Anteil der Impedanz an - allerdings steigen Kapazität und resistiver Anteil der Impedanz im ungleichen Masse an, wodurch sich der Phasenwinkel der komplexen Impedanz verändert. Hierdurch werden die Volumenmessungen ungenau.

Wenn die Eintauchdetektionselektrode 10 hingegen zumindest teilweise an der inneren Oberfläche des Pipettenkörpers 4 angebracht ist, wie erfindungsgemäss vorgeschlagen und in Fig. 6b) schematisch dargestellt, steigt der resistive Anteil im gleichen Masse wie die Kapazität an. Daher bleibt der Phasenwinkel der komplexen Impedanz unverändert und der imaginäre, kapazitive Anteil bleibt dominant. Hieraus resultieren vorteilhafterweise sehr präzise Volumenmessungen. Mit anderen Worten, aufgrund der vorteilhaften Anordnung der Eintauchdetektionselektrode 10 direkt an der Innenfläche des Pipettenkörpers 4, ist die Eintauchdetektionselektrode 10 stets auf dem gleichen Potential wie die Probenflüssigkeit 6, wodurch vorteilhafterweise eine Abhängigkeit der Leitfähigkeit der Probenflüssigkeit vom Volumen der Probenflüssigkeit 6 im Pipettenkörper 4 eliminiert wird.

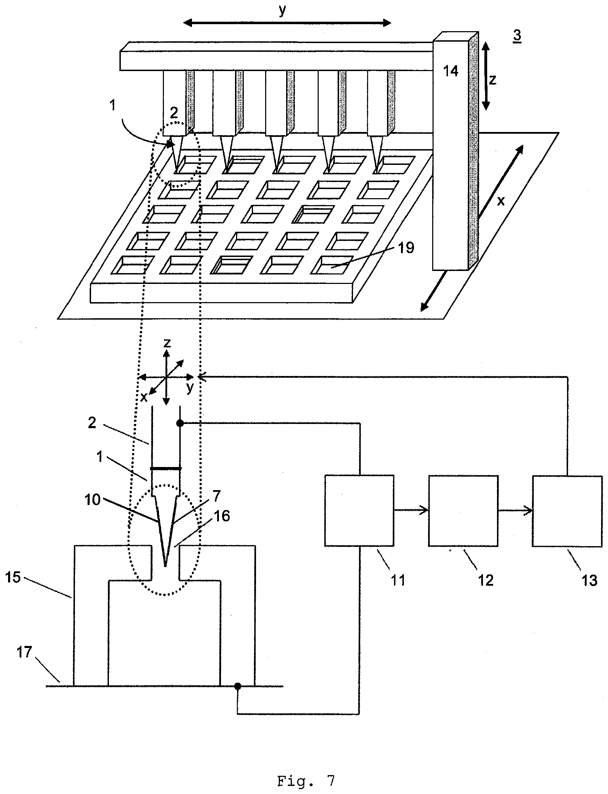

Fig. 7 illustriert in einer vereinfachten schematischen Darstellung ein Ausführungsbeispiel einer erfindungsgemässen Pipettiervorrichtung. Diese Abbildung zeigt die Pipettenröhre 2 mit einer aufgesetzten Pipettenspitze 1, welche zuvor aus einer Aufnahme 16 einer Pipettenspitzenhalterung 15 entnommen wurde und nun von einem Roboterarm 14 an einem Flüssigkeitsbearbeitungssystem 3 vertikal nach oben bewegt und damit von der Pipettenspitzenhalterung 15 entfernt wird. Dabei kann eine Kapazitätsmesseinheit 11, welche mit der Pipettenröhre 2 und damit auch mit der Pipettenspitze 1 als erste Elektrode und mit dem Arbeitstisch bzw. der Arbeitsfläche 17 und damit auch mit der Pipettenspitzenhalterung 15 (oder einem Bestandteil davon) als zweite (Gegen-)Elektrode verbunden ist, die (absolute) Kapazität des diese beiden Elektroden umfassenden Messkondensators bestimmen. Je nach Typ oder Art (z.B. Grösse/Fassungsvolumen) der Pipettenspitze 1 wird der gemessene Wert der Kapazität unterschiedlich sein. Dazu wird der gemessene Wert der Kapazität in einer Detektionseinheit 12 mit verschiedenen Referenzwerten verglichen, wobei jeder Referenzwert charakteristisch ist für einen bestimmten Typ oder eine bestimmte Art von Pipettenspitze 1. Die Detektionseinheit 12 gibt dann eine Information darüber, ob eine Pipettenspitze 1 an der Pipettenröhre 2 angeschlossen ist, und falls ja um welchen Typ oder Art von Pipettenspitze 1 es sich handelt, an eine Steuerungseinheit 13 eines Antriebs für den Roboterarm 14 weiter. Der Roboterarm 14 hat hierbei eine erste horizontale Bewegungsachse (x-Richtung, z.B. nach vorne und hinten), eine zweite horizontale Bewegungsachse (y-Richtung, z.B. nach links und rechts) und eine vertikale Bewegungsachse (z-Richtung, z.B. nach unten und oben).

Die Pipettenspitzenhalterung 15 kann beispielsweise auch Teil des Flüssigkeitsbearbeitungssystems 3 sein, wobei der Roboterarm 14 zur Bestimmung der Kapazität und damit zur Detektion des Pipettenspitzentyps bzw. der Pipettenspitzengrösse die Pipettenröhre 2 mit angeschlossener Pipettenspitze 1 jeweils zur Pipettenspitzenhalterung 15 hinbewegt und zur Kapazitätsmessung in die Aufnahme 16 absenkt. So stellt die Pipettenspitzenhalterung 15 eine separate/dedizierte "Messstation" zur Pipettenspitzenerkennung innerhalb des Flüssigkeitsbearbeitungssystems 3 dar.

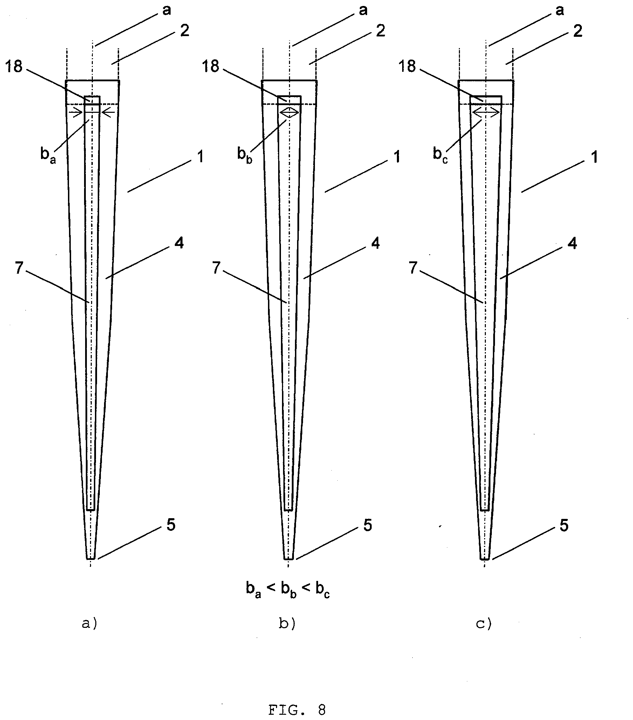

Schliesslich zeigen die Figuren 8a)-c) in schematischer Darstellung beispielhaft drei Pipettenspitzen 1 mit einer jeweils unterschiedlich breiten Volumenmesselektrode 7. Die drei Pipettenspitzen 1 können einen Satz von drei unterscheidbaren Typen von Pipettenspitzen 1 bilden, welche mittels des vorgeschlagenen Erkennungsverfahrens basierend auf den unterschiedlichen Kapazitäten, welche sich aufgrund der verschiedenen Breiten bₐ < b_{b} < b_{c} der Volumenmesselektroden 7 ergeben, voneinander unterschieden und erkannt werden können. Zusätzlich oder alternativ, obwohl in den Figuren nicht gezeigt, können die jeweiligen Eintauchdetektionselektroden der drei Pipettenspitzen 1 eine jeweils unterschiedliche Breite haben, wodurch die drei Pipettenspitzen 1 mittels des vorgeschlagenen Erkennungsverfahrens basierend auf den unterschiedlichen Kapazitäten, welche sich aufgrund der verschiedenen Breiten der Eintauchdetektionselektroden ergeben, voneinander unterschieden und erkannt werden können.

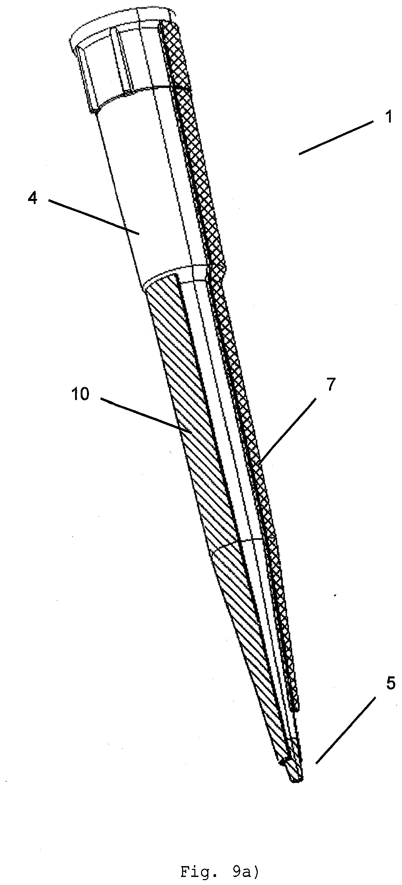

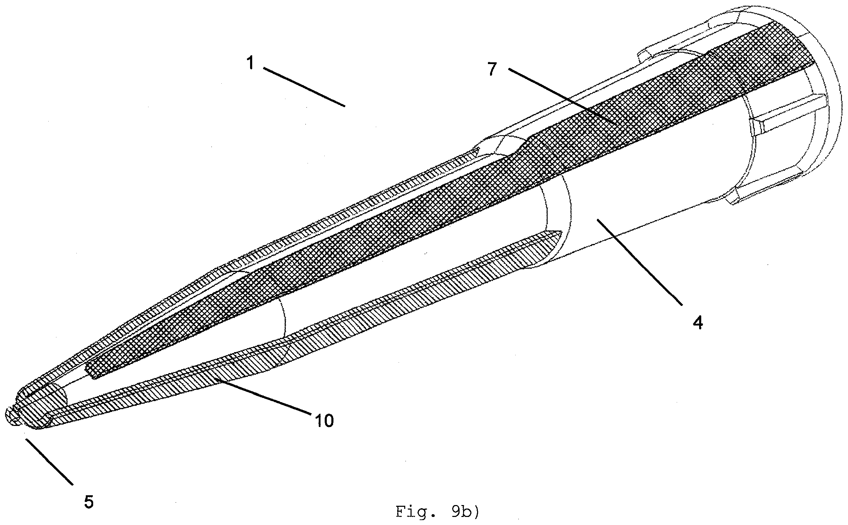

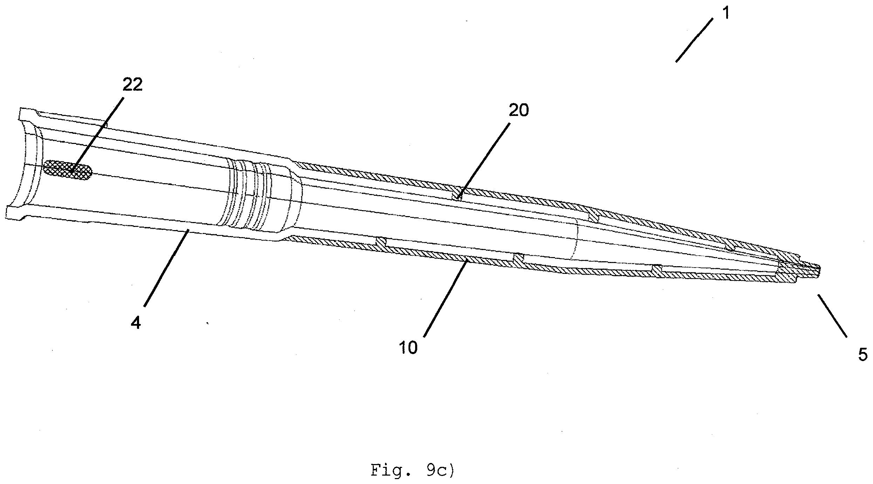

Figuren 9a)-c) veranschaulichen die Pipettenspitze 1 gemäss der Erfindung in einer weiteren Ausführungsform. In dieser Ausführungsform ist die erste Elektrode 7 als Volumenmesselektrode auf der äusseren Oberfläche des Pipettenkörpers 4 angeordnet. Die erste Elektrode 7 erstreckt sich nicht bis zur Öffnung 5 an der vorderen Spitze des Pipettenkörpers 4 (erstes Ende) und ist von dieser Öffnung 5 beabstandet. Die zweite Elektrode 10 als Eintauchdetektionselektrode ist derart angeordnet, dass sie sich teilweise auf der inneren Oberfläche des Pipettenkörpers 4 befindet. Hierzu ragen Kontaktierungspunkte 20 der zweiten Elektrode 10 derart in das Innere des Pipettenkörpers 4, dass die Flächen am jeweils distalen Ende z.B. bündig mit der inneren Oberfläche des Pipettenkörpers 4 abschliessen, wie z.B. in Fig. 9c) gezeigt. Obwohl nicht gezeigt, können die Flächen am jeweils distalen Ende auch nicht bündig mit der inneren Oberfläche des Pipettenkörpers 4 abschliessen. Weitere Abschnitte der zweiten Elektrode 10 verlaufen an der Aussenfläche des Pipettenkörpers 4 und können von dort aus elektrisch angeschlossen werden. Die Eintauchdetektionselektrode 10 umläuft den Pipettenkörper 4 mit einem Umlaufwinkel von z.B. > 180°, beispielsweise 220°. Somit ist es vorteilhafterweise ermöglicht, dass Kontaktierungspunkte 20 zueinander gegenüberliegend angeordnet sein können, wie in Fig. 9c) gezeigt. Ferner können jeweils gegenüberliegend angeordnete Kontaktierungspunkte 20 zueinander versetzt angeordnet sein. Die jeweils gegenüberliegenden Kontaktierungspunkte 20 können bei einem festgelegten Versatz zueinander beabstandet sein.

Die vordere Spitze des Pipettenkörpers 4 im Bereich der Öffnung 5 hiervon ist in dem gezeigten Beispiel vollständig umlaufend mit dem Material der zweiten Elektrode 10 umgeben. In einem Beispiel kann die Öffnung im Inneren ebenfalls abschnittsweise mit dem Material der zweiten Elektrode 10 umgeben sein. Hierdurch kann insgesamt eine verbesserte Eintauchdetektion ermöglicht werden. Die erste Elektrode 7 ist in dem sich eröffnenden Teil (Sektor) der teilweise umlaufenden zweiten Elektrode 10 angeordnet. Vorteilhafterweise ist die zweite Elektrode 10 hierin mittig angeordnet. Wie in Fig. 9c) gezeigt, ist das nichtleitende Material des Pipettenkörpers 4 im oberen Abschnitt hiervon mit einer Durchgangsöffnung 22 versehen, durch welche vom Inneren des Pipettenkörpers 4 aus eine elektrische Kontaktierung mit der (äusseren) ersten Elektrode 7 ermöglicht wird. Hierdurch kann die erste Elektrode 7 elektrisch mit der Pipettenröhre (siehe Fig. 7) verbunden werden.

### LISTE DER BEZUGSZEICHEN

- 1: Pipettenspitze
- 2: Pipettenröhre
- 3: Pipettiervorrichtung
- 4: Pipettenkörper
- 5: Öffnung am einen, ersten Ende des Pipettenkörpers
- 6: (Proben-)Flüssigkeit
- 7: erste Elektrode, Volumenmesselektrode
- 7T1,7T2: erste Teilelektroden
- 8: elektrisch isolierende Schicht/Beschichtung (über der ersten Elektrode und dem Pipettenkörper)
- 10: zweite Elektrode, Eintauchdetektionselektrode
- 10T1,10T2: zweite Teilelektroden
- 11: (Kapazitäts-)Messeinheit
- 12: Detektionseinheit
- 13: Steuereinheit zur Bewegungssteuerung des Antriebs des Pipettierroboters
- 14: Pipettierroboter inkl. Antrieb
- 15: Pipettenspitzenhalterung/-träger
- 16: Aufnahme für eine Pipettenspitze
- 17: Arbeitstisch/-fläche
- 18: elektrischer Kontakt
- 19: (Proben-)Behälter, wie z.B. eine Mikroplatte mit Wells
- 20: Kontaktierungspunkt
- 22: Durchgangsöffnung
- a: Achse der Pipettenspitze
- bₐ: Elektrodenbreite a
- b_{b}: Elektrodenbreite b
- b_{c}: Elektrodenbreite c
- x: erste horizontale Bewegungsachse des Pipettierroboters (z.B. nach vorne und hinten)
- y: zweite horizontale Bewegungsachse des Pipettierroboters (z.B. nach links und rechts)
- z: vertikale Bewegungsachse des Pipettierroboters (nach unten und oben)

## Patentansprüche

1. Pipettenspitze (1) zum Anschliessen an eine Pipettenröhre (2) von einer Pipettiervorrichtung (3), wobei die Pipettenspitze (1) als langgestreckte Röhre geformt ist, welche einen Pipettenkörper (4) bildet, der an seinem einen, ersten Ende eine Öffnung (5) zum Aspirieren und/oder Dispensieren von Flüssigkeiten aufweist, und an seinem anderen Ende zum Anschliessen an die Pipettenröhre (2) ausgebildet ist, **dadurch gekennzeichnet, dass** die Pipettenspitze (1) eine erste Elektrode (7) als Volumenmesselektrode eines Messkondensators und eine zweite Elektrode (10) als Eintauchdetektionselektrode aufweist, wobei sich die erste Elektrode (7) auf einer äusseren Oberfläche des Pipettenkörpers (4) befindet oder im Pipettenkörper (4) eingebettet ist, und wobei sich die erste Elektrode (7) nicht bis zur Öffnung (5) am ersten Ende erstreckt und insbesondere von dieser Öffnung (5) beabstandet ist, und sich die zweite Elektrode (10) zumindest teilweise auf einer inneren Oberfläche des Pipettenkörpers (4) befindet, wobei die erste Elektrode (7) und zweite Elektrode (10) elektrisch leitfähig sind und die zweite Elektrode die Flüssigkeit an der inneren Oberfläche des Pipettenkörpers zumindest teilweise galvanisch kontaktiert.

2. Pipettenspitze (1) nach Anspruch 1, wobei der Pipettenkörper (4) aus einem elektrisch nichtleitenden Material, insbesondere einem nichtleitenden Kunststoff, wie beispielsweise nichtleitendes Polypropylen, besteht, welches insbesondere zumindest als Teil eines Dielektrikums des Messkondensators wirkt.

3. Pipettenspitze (1) nach einem der vorhergehenden Ansprüche, wobei die zweite Elektrode (10) im Wesentlichen ausserhalb des relevanten Messkondensators angeordnet ist.

4. Pipettenspitze (1) nach einem der Ansprüche 1 oder 2, wobei die erste Elektrode zumindest zwei erste Teilelektroden (7T1,7T2) enthält und die zweite Elektrode zumindest zwei zweite Teilelektroden (10T1,10T2) enthält, wobei die ersten Teilelektroden (7T1,7T2) zueinander gegenüberliegend angeordnet sind und die zweiten Teilelektroden (10T1,10T2) zueinander gegenüberliegend angeordnet sind.

5. Pipettenspitze (1) nach einem der vorhergehenden Ansprüche, wobei die erste Elektrode (7) länglich, insbesondere streifenförmig ausgebildet ist und axial entlang der Pipettenspitze (1) verläuft, und insbesondere in einem Winkelbereich zwischen 20° und 270°, bevorzugt in einem Winkelbereich von 40° umläuft.

6. Pipettenspitze (1) nach einem der Ansprüche 1 bis 4, wobei die erste Elektrode (7) länglich, insbesondere streifenförmig ausgebildet ist, axial entlang der Pipettenspitze (7) verläuft und abschnittsweise unterschiedlich breit ist, wobei die erste Elektrode (7) insbesondere ein treppenstufenförmiges Breitenprofil in axialer Richtung aufweist, und die Breite der ersten Elektrode (7) z.B. am ersten Ende am geringsten ist, und die Breite in axialer Richtung stufenweise grösser wird.

7. Pipettenspitze (1) nach einem der vorhergehenden Ansprüche, wobei die erste Elektrode (7) in einem Bereich von 3 mm bis 6 mm, bevorzugt in einem Bereich von 4 mm bis 6 mm, besonders bevorzugt um 5 mm von der Öffnung (5) beabstandet ist.

8. Pipettenspitze (1) nach einem der vorhergehenden Ansprüche, wobei die zweite Elektrode (10) im Wesentlichen streifenförmig ausgebildet ist und axial entlang der Röhre verläuft, und insbesondere bis zu drei Vierteln des Innenumfangs der Pipettenspitze (1) umläuft, weiter insbesondere die Hälfte des Innenumfangs der Pipettenspitze (1) umläuft.

9. Pipettenspitze (1) nach einem der vorhergehenden Ansprüche, wobei die zweite Elektrode (10) die Flüssigkeit im Pipettenkörper (4) an im Wesentlichen vorbestimmten Kontaktierungspunkten (20) entlang der Axialrichtung des Pipettenkörpers (4) kontaktiert, wobei die Kontaktierungspunkte (20) in einem Winkelbereich zueinander zwischen 90° und 270°, bevorzugt 180°, angeordnet sind.

10. Pipettenspitze (1) nach einem der vorhergehenden Ansprüche, wobei die zweite Elektrode (10) sich bis zur Öffnung (5) am ersten Ende erstreckt oder die Öffnung zumindest teilweise durch die zweite Elektrode ausgebildet ist.

11. Pipettenspitze (1) nach einem der vorhergehenden Ansprüche, wobei die Pipettenspitze (1) eine Wegwerf-Pipettenspitze ist, welche insbesondere zum einmaligen Gebrauch vorgesehen ist.

12. Pipettiervorrichtung (3) umfassend wenigstens eine Pipettenröhre (2), ein Druckerzeugungsmittel sowie eine Messeinheit (11), wobei an einem ersten Ende der Pipettenröhre (2) eine Pipettenspitze (1) nach einem der Ansprüche 1 bis 11 fluiddicht angeschlossen ist, und an ihrem anderen Ende die Pipettenröhre (2) mit dem Druckerzeugungsmittel verbunden ist.

13. Pipettiervorrichtung (3) nach Anspruch 12, wobei in einem Bereich zum Anschliessen der Pipettenspitze (1) ein erster elektrischer Kontakt (18) zur Herstellung einer elektrischen Verbindung mit einer ersten Elektrode (7) als Volumenmesselektrode vorhanden ist, welche sich auf einer äusseren Oberfläche des Pipettenkörpers (4) befindet oder im Pipettenkörper (4) eingebettet ist.

14. Pipettiervorrichtung (3) nach Anspruch 13, wobei sich die Flüssigkeit in einem Probenbehälter (19) befindet, welcher elektrisch leitend oder kapazitiv gekoppelt mit einer leitfähigen Arbeitstischoberfläche (17) verbunden ist, welche mit Masse verbunden ist.

15. Pipettiervorrichtung (3) nach Anspruch 14, wobei der erste elektrische Kontakt (7) über einen elektrischen Leiter mit der Messeinheit (11) verbunden ist und der zweite elektrische Kontakt (10) über die Flüssigkeit und eine kapazitive Kopplung der Flüssigkeit mit der Arbeitstischoberfläche (17) mit der Messeinheit (11) verbunden ist.

16. Pipettiervorrichtung (3) nach Anspruch 14 oder 15, wobei die Messeinheit (11) ausgebildet ist, um in Abhängigkeit einer gemessenen Kapazität eines Messkondensators, welcher durch die erste Elektrode (7) und mindestens einen Teil einer in der Pipettenspitze (1) aufnehmbaren Probenflüssigkeit (6) als Gegenelektrode gebildet wird, ein Volumen einer sich in der Pipettenspitze (1) befindenden Probenflüssigkeit (6) zu bestimmen, und weiter ausgebildet ist, um mit Hilfe der zweiten Elektrode (10) ein Eintauchen der Pipettenspitze (1) in die Probenflüssigkeit (6) zu detektieren.

17. Pipettiervorrichtung (3) nach einem der Ansprüche 12 bis 16, weiter umfassend eine Detektionseinheit (12) zum Erkennen ob die Pipettenspitze (1) am ersten Ende der Pipettenröhre (2) angeschlossen ist, und/oder zum Erkennen eines charakteristischen Merkmals der Pipettenspitze (1) basierend auf einer Messung einer weiteren Kapazität, wobei die weitere Kapazität abhängig ist von einem oder mehreren der folgenden Eigenschaften:
- einem Material aus dem die Pipettenspitze (1) besteht;
- einer Geometrie der Pipettenspitze (1), insbesondere einer Form der Pipettenspitze (1), weiter insbesondere einem Durchmesser und/oder einer Länge der Pipettenspitze (1);
- einer Beschichtung (8) der Pipettenspitze (1), insbesondere einem Material aus dem die Beschichtung (8) der Pipettenspitze (1) besteht, weiter insbesondere einer Ausdehnung oder Dicke der Beschichtung (8) der Pipettenspitze (1);
- einem Material aus dem die erste und/oder zweite Elektrode (7,10) besteht;
- einer Geometrie der ersten und/oder zweiten Elektrode (7,10) .

18. Verfahren zum Bestimmen eines Volumens einer Probenflüssigkeit (6) in einer Pipettenspitze (1) nach einem der Ansprüche 1 bis 11, wobei das Verfahren folgende Schritte umfasst:
- Messen einer Kapazität eines Messkondensators, umfassend eine erste Elektrode (7), welche sich auf einer äusseren Oberfläche des Pipettenkörpers (4) befindet oder im Pipettenkörper (4) eingebettet ist, und eine Gegenelektrode, die durch mindestens einen Teil einer Probenflüssigkeit (6), welche sich in der Pipettenspitze (1) befindet, gebildet wird;
- Bestimmen des Volumens der Probenflüssigkeit (6) in der Pipettenspitze (1) in Abhängigkeit der gemessenen Kapazität.

19. Verfahren nach Anspruch 18, weiter umfassend den Schritt:
- Detektieren eines Eintauchens der Pipettenspitze (1) in die Probenflüssigkeit (6) mit Hilfe einer zweiten Elektrode (10) als Eintauchdetektionselektrode, wobei sich die zweite Elektrode zumindest teilweise auf einer inneren Oberfläche des Pipettenkörpers befindet.

20. Verfahren zum Erkennen einer Pipettenspitze (1) nach einem der Ansprüche 1 bis 11 an einer Pipettiervorrichtung (3) mit einer Pipettenröhre (2), die an ihrem einen, ersten Ende zum lösbaren Aufnehmen einer Pipettenspitze (1) zum Aspirieren bzw. Dispensieren einer Flüssigkeit (6) ausgebildet ist, und die an ihrem anderen Ende mit einem Druckerzeugungsmittel wirkverbunden ist, wobei das Verfahren ein Messen einer Kapazität umfasst, die abhängig ist von einem oder mehreren der folgenden Eigenschaften:
- einem Material aus dem die Pipettenspitze (1) besteht;
- einer Geometrie der Pipettenspitze (1), insbesondere einer Form der Pipettenspitze (1), weiter insbesondere einem Durchmesser und/oder einer Länge der Pipettenspitze (1);
- einer Beschichtung (8) der Pipettenspitze (1), insbesondere einem Material aus dem die Beschichtung (8) der Pipettenspitze (1) besteht, weiter insbesondere einer Ausdehnung oder Dicke der Beschichtung (8) der Pipettenspitze (1);
- einem Material aus dem die erste und/oder zweite Elektrode (7,10) besteht;
- einer Geometrie der ersten und/oder zweiten Elektrode (7,10) .

21. Verfahren zur Herstellung einer Pipettenspitze (1) nach einem der Ansprüche 1 bis 11, umfassend:
- Formen der Pipettenspitze (1) als langgestreckte Röhre, welche einen Pipettenkörper (4) bildet, aus einem ersten Material,
- Formen einer ersten Elektrode (7) aus einem zweiten Material an der Pipettenspitze (1) auf einer äusseren Oberfläche des Pipettenkörpers (4) oder im Pipettenkörper (4) eingebettet,
- Formen einer zweiten Elektrode (10) aus einem dritten Material an der Pipettenspitze (1) zumindest teilweise auf einer inneren Oberfläche des Pipettenkörpers (4).

22. Verfahren nach Anspruch 21, wobei die Schritte des Formens mittels eines Mehrkomponentenspritzgussverfahrens, insbesondere desselben Mehrkomponentenspritzgussverfahrens, gleichzeitig mit dem Formen der Pipettenspitze (1) und der ersten und/oder zweiten Elektrode (7,10), erfolgen.

23. Verwendung einer Pipettenspitze (1) nach einem der Ansprüche 1 bis 11 zum Bestimmen eines Volumens einer Probenflüssigkeit (6), welche sich in der Pipettenspitze (1) befindet, mit Hilfe der ersten Elektrode (7) als Volumenmesselektrode an der Pipettenspitze (1).

24. Verwendung der Pipettenspitze (1) nach einem der Ansprüche 1 bis 11 zum Detektieren eines Eintauchens der Pipettenspitze (1) in die Probenflüssigkeit (6) mit Hilfe der zweiten Elektrode (10) als Eintauchdetektionselektrode an der Pipettenspitze (1).

25. Satz von Pipettenspitzen (1) nach einem der Ansprüche 1 bis 11, umfassend mindestens zwei Typen von Pipettenspitzen (1), wobei sich die mindestens zwei Typen darin unterscheiden, dass beim Anwenden des Verfahrens zum Erkennen einer Pipettenspitze (1) nach Anspruch 20 eine Kapazität eines ersten Typs von Pipettenspitzen (1) in einem ersten Bereich liegt und die Kapazität eines zweiten Typs von Pipettenspitzen (1) in einem zweiten Bereich liegt, wobei der erste und zweite Bereich nicht überlappend sind, und wobei sich die mindestens zwei Typen von Pipettenspitzen (1) insbesondere durch eines der folgenden Merkmale unterscheiden:
- Fassungsvolumen;
- Spitzenöffnungsgrösse/-durchmesser zum Aspirieren und Dispensieren einer Flüssigkeit;
- mit oder ohne Filter zur Verhinderung von Kontaminationen der Pipettenröhre (2) beim Aspirieren einer Probenflüssigkeit (6), sowie insbesondere eine Art des Filters;
- Reinheitskategorie;
- Verwendungszweck;
- Volumenmessfunktion;
- Dichtungsvermögen eines Anschlusses der Pipettenspitzen (1) an die Pipettenröhre (2),
und wobei insbesondere die äussere Geometrie der mindestens zwei Typen von Pipettenspitzen (1) identisch sein kann.

## Claims

1. Pipette tip (1) for connection to a pipette tube (2) of a pipetting device (3), wherein the pipette tip (1) is formed as an elongated tube forming a pipette body (4) having at one first end thereof an opening (5) for aspirating and/or dispensing liquids and being adapted at the other end thereof for connection to the pipette tube (2), **characterized in that** the pipette tip (1) has a first electrode (7) as volume measuring electrode of a measuring capacitor and a second electrode (10) as immersion detection electrode, wherein the first electrode (7) is disposed on an outer surface of the pipette body (4) or is embedded in the pipette body (4), and wherein the first electrode (7) does not extend to the opening (5) at the first end and in particular is spaced from this opening (5), and the second electrode (10) is disposed at least partially on an inner surface of the pipette body (4), wherein the first electrode (7) and second electrode (10) are electrically conductive, and the second electrode at least partially galvanically contacts the liquid at the inner surface of the pipette body.

2. Pipette tip (1) according to claim 1, wherein the pipette body (4) comprises an electrically non-conductive material, in particular a non-conductive plastic, such as for example non-conductive polypropylene, which acts in particular at least as a part of a dielectric of the measuring capacitor.

3. Pipette tip (1) according to one of the preceding claims, wherein the second electrode (10) is arranged substantially outside the relevant measuring capacitor.

4. Pipette tip (1) according to one of claims 1 or 2, wherein the first electrode comprises at least two first partial electrodes (7T1, 7T2) and the second electrode comprises at least two second partial electrodes (10T1, 10T2), wherein the first partial electrodes (7T1, 7T2) are arranged opposite to each other and the second partial electrodes (10T1, 10T2) are arranged opposite to each other.

5. Pipette tip (1) according to one of the preceding claims, wherein the first electrode (7) is formed elongated, in particular strip-shaped, and extends axially along the pipette tip (1), and in particular surrounds the pipette tip (1) in an angular range between 20° and 270°, preferably in an angular range of 40°.

6. Pipette tip (1) according to one of the claims 1 to 4, wherein the first electrode (7) is formed elongated, in particular strip-shaped, extends axially along the pipette tip (1) and section-wise is of different width, wherein the first electrode (7) in particular has a stepped width profile in the axial direction, and the width of the first electrode (7) is smallest at the first end, for example, and the width increases stepwise in the axial direction.

7. Pipette tip (1) according to one of the preceding claims, wherein the first electrode (7) is spaced from the opening (5) in a range from 3 mm to 6 mm, preferably in a range from 4 mm to 6 mm, particularly preferably by 5 mm.

8. Pipette tip (1) according to one of the preceding claims, wherein the second electrode (10) is formed substantially strip-shaped and extends axially along the tube, and in particular surrounds up to three quarters of the inner circumference of the pipette tip (1), further in particular surrounds half the inner circumference of the pipette tip (1).

9. Pipette tip (1) according to one of the preceding claims, wherein the second electrode (10) contacts the liquid in the pipette body (4) at substantially predetermined contact points (20) along the axial direction of the pipette body (4), wherein the contact points (20) are arranged with respect to one another in an angular range between 90° and 270°, preferably 180°.

10. Pipette tip (1) according to one of the preceding claims, wherein the second electrode (10) extends to the opening (5) at the first end or the opening is at least partially formed by the second electrode.

11. Pipette tip (1) according to one of the preceding claims, wherein the pipette tip (1) is a disposable pipette tip which is in particular intended for single use.

12. Pipetting device (3), comprising at least one pipette tube (2), a pressure-generating means and a measuring unit (11), wherein a pipette tip (1) according to one of the claims 1 to 11 is fluid-tightly connected at a first end of the pipette tube (2), and at its other end the pipette tube (2) is connected to the pressure-generating means.

13. Pipetting device (3) according to claim 12, wherein, in a region for connecting the pipette tip (1), a first electrical contact (18) is provided for establishing an electrical connection to a first electrode (7) as volume measuring electrode, which is provided on an outer surface of the pipette body (4) or is embedded in the pipette body (4) .

14. Pipetting device (3) according to claim 13, wherein the liquid is disposed in a sample container (19) which is electrically conductively or capacitively coupled to a conductive worktable surface (17) which is connected to ground.

15. Pipetting device (3) according to claim 14, wherein the first electrical contact (7) is connected to the measuring unit (11) via an electrical conductor and the second electrical contact (10) is connected to the measuring unit (11) via the liquid and a capacitive coupling of the liquid to the worktable surface (17).

16. Pipetting device (3) according to claim 14 or 15, wherein the measuring unit (11) is adapted to determine a volume of a sample liquid (6) contained in the pipette tip (1) depending on a measured capacitance of a measuring capacitor formed by the first electrode (7) and at least a part of a sample liquid (6) receivable in the pipette tip (1) as a counter electrode, and further adapted to detect an immersion of the pipette tip (1) into the sample liquid (6) by means of the second electrode (10).

17. Pipetting device (3) according to one of claims 12 to 16, further comprising a detection unit (12) for detecting whether the pipette tip (1) is connected to the first end of the pipette tube (2) and/or for detecting a characteristic feature of the pipette tip (1) based on a measurement of a further capacitance, wherein the further capacitance is dependent on one or more of the following characteristics:
- a material of which the pipette tip (1) is made;
- a geometry of the pipette tip (1), in particular a shape of the pipette tip (1), further in particular a diameter and/or a length of the pipette tip (1);
- a coating (8) of the pipette tip (1), in particular a material of which the coating (8) of the pipette tip (1) is made, further in particular an expansion or thickness of the coating (8) of the pipette tip (1);
- a material of which the first and/or second electrode (7, 10) is made;
- a geometry of the first and/or second electrode (7, 10).

18. Method for determining a volume of a sample liquid (6) in a pipette tip (1) according to one of claims 1 to 11, wherein the method comprises the steps of:
- measuring a capacitance of a measuring capacitor comprising a first electrode (7), which is provided on an outer surface of the pipette body (4) or is embedded in the pipette body (4), and a counter electrode formed by at least a portion of a sample liquid (6) contained in the pipette tip (1);
- determining the volume of the sample liquid (6) in the pipette tip (1) as a function of the measured capacitance.

19. Method according to claim 18, further comprising the step of:
- detecting an immersion of the pipette tip (1) in the sample liquid (6) by means of a second electrode (10) as immersion detection electrode, wherein the second electrode is at least partially provided on an inner surface of the pipette body.

20. Method for detecting a pipette tip (1) according to one of claims 1 to 11 on a pipetting device (3) having a pipette tube (2) formed at one first end thereof for releasably receiving a pipette tip (1) for aspirating or dispensing a liquid (6) and operatively connected at the other end thereof to a pressure-generating means, wherein the method comprises measuring a capacitance depending on at least more of the following characteristics:
- a material of which the pipette tip (1) is made;
- a geometry of the pipette tip (1), in particular a shape of the pipette tip (1), further in particular a diameter and/or a length of the pipette tip (1);
- a coating (8) of the pipette tip (1), in particular a material of which the coating (8) of the pipette tip (1) is made, further in particular an expansion or thickness of the coating (8) of the pipette tip (1);
- a material of which the first and/or second electrode (7, 10) is made;
- a geometry of the first and/or second electrode (7, 10).

21. Method for manufacturing a pipette tip (1) according to one of claims 1 to 11, comprising:
- forming the pipette tip (1) as an elongated tube, forming a pipette body (4), from a first material,
- forming a first electrode (7) of a second material at the pipette tip (1) on an outer surface of the pipette body (4) or embedded in the pipette body (4),
- forming a second electrode (10) of a third material on the pipette tip (1) at least partially on an inner surface of the pipette body (4).

22. Method according to claim 21, wherein the steps of forming are carried out by means of a multi-component injection molding process, in particular the same multi-component injection molding process, simultaneously with the forming of the pipette tip (1) and the first and/or second electrode (7, 10).

23. Usage of a pipette tip (1) according to one of claims 1 to 11 for determining a volume of a sample liquid (6) contained in the pipette tip (1) by means of the first electrode (7) as a volume measuring electrode on the pipette tip (1).

24. Usage of the pipette tip (1) according to one of claims 1 to 11 for detecting an immersion of the pipette tip (1) in the sample liquid (6) by means of the second electrode (10) as an immersion detection electrode on the pipette tip (1).

25. A set of pipette tips (1) according to one of claims 1 to 11, comprising at least two types of pipette tips (1), wherein said at least two types differ in that, when using the method for recognizing a pipette tip (1) according to claim 20, a capacitance of a first type of pipette tips (1) is in a first range and the capacitance of a second type of pipette tips (1) is in a second range, wherein the first and second ranges are non-overlapping, and wherein the at least two types of pipette tips (1) differ in particular by one of the following features:
- volumetric capacity;
- tip opening size/diameter for aspirating and dispensing a liquid;
- with or without filter in order to prevent contaminations of the pipette tube (2) when aspirating a sample liquid (6), and in particular a type of the filter;
- purity category;
- intended use;
- volume measurement function;
- sealing capacity of a connection of the pipette tips (1) to the pipette tube (2),
and wherein in particular the external geometry of the at least two types of pipette tips (1) may be identical.

## Revendications

1. Pointe de pipette (1) destinée à être reliée à un tube de pipette (2) d'un dispositif de pipetage (3), la pointe de pipette (1) prenant la forme d'un tube allongé qui forme un corps de pipette (4) qui présente au niveau de sa première extrémité une ouverture (5) pour aspirer et/ou délivrer des liquides, et qui est réalisé au niveau de son autre extrémité pour être raccordé au tube de pipette (2), **caractérisée en ce que** la pointe de pipette (1) présente une première électrode (7) en tant qu'électrode de mesure de volume d'un condensateur de mesure, et une deuxième électrode (10) en tant qu'électrode de détection d'immersion, la première électrode (7) se trouvant sur une surface extérieure du corps de pipette (4) ou étant intégrée au corps de pipette (4), la première électrode (7) ne s'étendant pas jusqu'à l'ouverture (5) au niveau de la première extrémité et étant en particulier espacée de cette ouverture (5), et la deuxième électrode (10) se trouvant au moins en partie sur la surface intérieure du corps de pipette (4), la première électrode (7) et la deuxième électrode (10) étant électriquement conductrices et la deuxième électrode étant au moins en partie mise en contact galvanique avec le liquide sur la surface intérieure du corps de pipette.

2. Pointe de pipette (1) selon la revendication 1, dans laquelle le corps de pipette (4) est constitué d'un matériau électriquement non conducteur, en particulier une matière plastique non conductrice, comme par exemple du polypropylène non conducteur, lequel agit en particulier au moins comme partie d'un diélectrique du condensateur de mesure.

3. Pointe de pipette (1) selon l'une des revendications précédentes, dans laquelle la deuxième électrode (10) est agencée essentiellement en-dehors du condensateur de mesure correspondant.

4. Pointe de pipette (1) selon l'une des revendications 1 ou 2, dans laquelle la première électrode contient au moins deux premières électrodes partielles (7T1, 7T2) et la deuxième électrode contient au moins deux deuxièmes électrodes partielles (10T1, 10T2), les premières électrodes partielles (7T1, 7T2) étant agencées à l'opposé l'une de l'autre et les deuxièmes électrodes partielles (10T1, 10T2) étant agencées à l'opposé l'une de l'autre.

5. Pointe de pipette (1) selon l'une des revendications précédentes, dans laquelle la première électrode (7) est réalisée allongée, en particulier en forme de bande, et s'étend axialement le long de la pointe de pipette (1), et s'étend en particulier selon un angle compris entre 20° et 270°, en particulier selon un angle de 40°.

6. Pointe de pipette (1) selon l'une des revendications 1 à 4, dans laquelle la première électrode (7) est réalisée allongée, en particulier en forme de bande, s'étend axialement le long de la pointe de pipette (1) et a une largeur différente par endroits, la première électrode (7) présentant en particulier un profil de largeur en forme d'escalier dans le sens axial, la largeur de la première électrode (7) étant la plus petite par exemple au niveau de la première extrémité et augmentant graduellement dans le sens axial.

7. Pointe de pipette (1) selon l'une des revendications précédentes, dans laquelle la première électrode (7) est espacée de l'ouverture (5) d'environ 3 mm à 6 mm, de préférence d'environ 4 mm à 6 mm, de façon particulièrement préférée d'environ 5 mm.

8. Pointe de pipette (1) selon l'une des revendications précédentes, dans laquelle la deuxième électrode (10) est réalisée essentiellement en forme de bande et s'étend axialement le long du tube, et s'étend en particulier jusqu'aux trois quarts du pourtour intérieur de la pointe de pipette (1), plus particulièrement sur la moitié du pourtour intérieur de la pointe de pipette (1).

9. Pointe de pipette (1) selon l'une des revendications précédentes, dans laquelle la deuxième électrode (10) entre en contact avec le liquide dans le corps de pipette (4) au niveau de points de contact (20) essentiellement prédéterminés le long de la direction axiale du corps de pipette (4), les points de contact (20) étant agencés entre eux selon un angle compris entre 90° et 270°, de préférence de 180°.

10. Pointe de pipette (1) selon l'une des revendications précédentes, dans laquelle la deuxième électrode (10) s'étend jusqu'à l'ouverture (5) au niveau de la première extrémité ou dans laquelle l'ouverture est formée au moins en partie par la deuxième électrode.

11. Pointe de pipette (1) selon l'une des revendications précédentes, dans laquelle la pointe de pipette (1) est une pointe de pipette jetable prévue en particulier pour un usage unique.

12. Dispositif de pipetage (3) comprenant au moins un tube de pipette (2), un dispositif générateur de pression et une unité de mesure (11), dans lequel il est raccordé de façon étanche à la première extrémité du tube de pipette (2) une pointe de pipette (1) selon l'une des revendications 1 à 11, et dans lequel le tube de pipette (2) est raccordé au niveau de son autre extrémité au dispositif générateur de pression.

13. Dispositif de pipetage (3) selon la revendication 12, dans lequel on trouve, dans la zone destinée à raccorder la pointe de pipette (1), un premier contact électrique (18) pour établir une liaison électrique avec une première électrode (7) en tant qu'électrode de mesure de volume, laquelle électrode se trouve sur une surface extérieure du corps de pipette (4) ou est intégrée dans le corps de pipette (4).

14. Dispositif de pipetage (3) selon la revendication 13, dans lequel le liquide se trouve dans un récipient d'échantillon (19) qui est couplé de façon électriquement conductrice ou de façon capacitive à une surface de plan de travail conductrice (17) qui est reliée à la masse.

15. Dispositif de pipetage (3) selon la revendication 14, dans lequel le premier contact électrique (7) est raccordé à l'unité de mesure (11) par le biais d'un conducteur électrique, et dans lequel le deuxième contact électrique (10) est raccordé à l'unité de mesure (11) par le biais du liquide et d'un couplage capacitif du liquide avec la surface de plan de travail (17).

16. Dispositif de pipetage (3) selon la revendication 14 ou 15, dans lequel l'unité de mesure (11) est conçue pour déterminer, en fonction de la capacité mesurée d'un condensateur de mesure, lequel est formé par la première électrode (7) et par au moins une partie d'un échantillon liquide (6) pouvant être reçu dans la pointe de pipette (1) comme contre-électrode, le volume d'échantillon liquide (6) se trouvant dans la pointe de pipette (1), et pour détecter à l'aide de la deuxième électrode (10) l'immersion de la pointe de pipette (1) dans l'échantillon liquide (6).

17. Dispositif de pipetage (3) selon l'une des revendications 12 à 16, comprenant en outre une unité de détection (12) pour vérifier si la pointe de pipette (1) est raccordée à la première extrémité du tube de pipette (2), et/ou pour vérifier une caractéristique de la pointe de pipette (1) sur la base d'une mesure d'une autre capacité, l'autre capacité dépendant d'une ou plusieurs des propriétés suivantes :
- le matériau dont est composée la pointe de pipette (1) ;
- la géométrie de la pointe de pipette (1), en particulier la forme de la pointe de pipette (1), plus particulièrement le diamètre et/ou la longueur de la pointe de pipette (1) ;
- le revêtement (8) de la pointe de pipette (1), en particulier le matériau dont est composé le revêtement (8) de la pointe de pipette (1), plus particulièrement l'étendue ou l'épaisseur du revêtement (8) de la pointe de pipette (1) ;
- le matériau dont est composée la première et/ou la deuxième électrode (7, 10) ;
- la géométrie de la première et/ou de la deuxième électrode (7, 10).

18. Procédé pour déterminer le volume d'un échantillon liquide (6) dans une pointe de pipette (1) selon l'une des revendications 1 à 11, le procédé comprenant les étapes suivantes consistant à :
- mesurer la capacité d'un condensateur de mesure comprenant une première électrode (7) qui se trouve sur une surface extérieure du corps de pipette (4) ou étant intégrée au corps de pipette (4) et une contre-électrode qui est formée par au moins une partie d'un échantillon liquide (6) qui se trouve dans la pointe de pipette (1) ;
- déterminer le volume de l'échantillon liquide (6) dans la pointe de pipette (1) en fonction de la capacité mesurée.

19. Procédé selon la revendication 18, comprenant en outre l'étape consistant à :
- détecter l'immersion de la pointe de pipette (1) dans l'échantillon liquide (6) à l'aide d'une deuxième électrode (10) comme électrode de détection d'immersion, la deuxième électrode se trouvant au moins en partie sur la surface intérieure du corps de pipette.

20. Procédé pour détecter une pointe de pipette (1) selon l'une des revendications 1 à 11 sur un dispositif de pipetage (3) avec un tube de pipette (2) conçu, au niveau d'une première extrémité, pour recevoir de façon amovible une pointe de pipette (1) pour aspirer ou distribuer un liquide (6), et en liaison active au niveau de son autre extrémité avec un dispositif générateur de pression, le procédé consistant à mesurer la capacité qui dépend d'une ou plusieurs des propriétés suivantes :
- le matériau dont est composée la pointe de pipette (1) ;
- la géométrie de la pointe de pipette (1), en particulier la forme de la pointe de pipette (1), plus particulièrement le diamètre et/ou la longueur de la pointe de pipette (1) ;
- le revêtement (8) de la pointe de pipette (1), en particulier le matériau dont est composé le revêtement (8) de la pointe de pipette (1), plus particulièrement l'étendue ou l'épaisseur du revêtement (8) de la pointe de pipette (1) ;
- le matériau dont est composée la première et/ou la deuxième électrode (7, 10) ;
- la géométrie de la première et/ou de la deuxième électrode (7, 10).

21. Procédé pour fabriquer une pointe de pipette (1) selon l'une des revendications 1 à 11, comprenant les étapes consistant à :
- former la pointe de pipette (1) sous la forme d'un tube allongé formant un corps de pipette (4) composé d'un premier matériau,
- former une première électrode (7) dans un deuxième matériau sur la pointe de pipette (1) sur une surface extérieure du corps de pipette (4) ou intégrée dans le corps de pipette (4),
- former une deuxième électrode (10) dans un troisième matériau sur la pointe de pipette (1), au moins en partie sur la surface intérieure du corps de pipette (4).

22. Procédé selon la revendication 21, dans lequel les étapes de mise en forme se font au moyen d'un procédé de moulage par injection multi-composants, en particulier le même procédé de moulage par injection multi-composants, en même temps que la formation de la pointe de pipette (1) et de la première et/ou de la deuxième électrode (7, 10).

23. Utilisation d'une pointe de pipette (1) selon l'une des revendications 1 à 11 pour déterminer le volume d'un échantillon liquide (6) qui se trouve dans la pointe de pipette (1), à l'aide de la première électrode (7) comme électrode de mesure de volume sur la pointe de pipette (1).

24. Utilisation de la pointe de pipette (1) selon l'une des revendications 1 à 11 pour détecter l'immersion de la pointe de pipette (1) dans l'échantillon liquide (6) à l'aide de la deuxième électrode (10) comme électrode de détection d'immersion sur la pointe de pipette (1).

25. Ensemble de pointes de pipette (1) selon l'une des revendications 1 à 11, comprenant au moins deux types de pointes de pipette (1), les au moins deux types se différenciant en ce que, lors de la mise en œuvre du procédé pour détecter une pointe de pipette (1) selon la revendication 20, la capacité du premier type de pointes de pipette (1) se trouve dans une première plage et la capacité du deuxième type de pointes de pipette (1) se trouve dans une deuxième plage, la première et la deuxième plages ne se chevauchant pas, et les au moins deux types de pointes de pipette (1) se distinguant en particulier par l'une des caractéristiques suivantes :
- la contenance ;
- la dimension / le diamètre de l'ouverture de pointe pour aspirer et délivrer un liquide ;
- la présence ou l'absence de filtre pour empêcher la contamination des tubes de pipette (2) lors de l'aspiration d'un échantillon liquide (6), et en particulier le type de filtre ;
- la catégorie de pureté ;
- l'utilisation prévue ;
- la fonction de mesure de volume ;
- la capacité d'étanchéité du raccord des pointes de pipette (1) sur les tubes de pipette (2),
et dans lequel en particulier la géométrie extérieure des au moins deux types de pointes de pipette (1) peut être identique.
